# EUROPEAN PATENT APPLICATION

(11) **EP 4 496 378 A1**
(43) Date of publication of application: **22.01.2025**
(21) Application number: 23799123.7
(22) Date of filing: 09.03.2023
(51) Int. Cl.: H04W 28/02

(54) **DATA REPORTING METHOD, APPARATUS, AND SYSTEM**

(30) Priority: 06.05.2022 CN 202210490110
(71) Applicant: Huawei Technologies Co., Ltd., Shenzhen, Guangdong 518129 (CN)
(72) Inventor: FENG, Zhao, Shenzhen, Guangdong 518129 (CN); XIN, Yang, Shenzhen, Guangdong 518129 (CN); WANG, Yuan, Shenzhen, Guangdong 518129 (CN); ZHOU, Runze, Shenzhen, Guangdong 518129 (CN)
(74) Representative: Körber, Martin Hans
(86) International application number: PCT/CN2023/080588
(87) International publication number: WO 2023/213134

(57) **Abstract**

Embodiments of this application relate to the field of communication systems, and provide a data reporting method, an apparatus, and a system, to reduce impact on performance of a user plane network element when the user plane network element reports data. The method includes: A data analytics network element sends a first message to a first user plane network element, where the first message includes first reporting information, the first message is used to request the first user plane network element to report first data based on the first reporting information, the first data is data generated when the first user plane network element detects that a first event is triggered, the first reporting information includes first indication information and/or reporting time information, the first indication information is used by the first user plane network element to determine whether the reporting of the first data can be delayed, and the reporting time information indicates the first user plane network element to determine time for reporting the first data. The data analytics network element receives the first data from the first user plane network element.

## Description

This application claims priority to Chinese Patent Application No. 202210490110.5, filed with the China National Intellectual Property Administration on May 6, 2022 and entitled "DATA REPORTING METHOD, APPARATUS, AND SYSTEM", which is incorporated herein by reference in its entirety.

### TECHNICAL FIELD

Embodiments of this application relate to the field of communication systems, and in particular, to a data reporting method, an apparatus, and a system.

### BACKGROUND

The 3rd generation partnership project release 15 (3rd Generation Partnership Project release 15, 3GPP R15) introduces a network data analytics function (Network Data Analytics Function, NWDAF) network element. In the R16 phase, an intelligent network architecture based on the NWDAF network element is defined. The architecture includes a series of procedures such as data collection, data analytics, analytics result feedback, and the like. In the R17 phase, the intelligent architecture is enhanced in terms of architecture and procedure. For example, architecture enhancement such as NWDAF network element function decoupling (such as a training function, an inference function, and ML model sharing), a plurality of NWDAF instances (such as a layered NWDAF architecture, NWDAF reselection, model sharing, time coordination, abnormal terminal behavior interaction, and the like), data collection efficiency improvement, terminal data reporting to the NWDAF, and the like, and new high-value scenarios such as intelligent network selection, slice SLA enhancement, hotspot analytics, and the like are supported. The intelligent network architecture aims to collect massive information on a network, and utilize these data by using the existing big data and artificial intelligence technologies, to output some valuable information, helping operators formulate policies and adjust network resources, to improve user experience, reduce network load, and the like.

In Releases R16 and R17, data analytics types that can be provided by the NWDAF network element are defined, such as a user experience analytics result, a network element load analytics result, a terminal mobility analytics result, and the like. To provide these analytics results, the NWDAF network element needs to collect corresponding data from different network elements (such as user plane network elements) on the network. Because a basic function of the user plane network element is an uplink/downlink user plane data forwarding function, if the user plane network element further needs to additionally collect data and report the data to the NWDAF network element, especially when the user plane network element needs to report data at a terminal (User Equipment, UE) level or a QoS flow (Quality of Service Flow, QoS Flow) level to the NWDAF network element, performance of the user plane network element is greatly affected, and consequently, that the user plane network element performs the basic uplink/downlink user plane data forwarding function is affected. However, in a conventional technology, no solution is provided currently to reduce impact on the performance of the user plane network element when the user plane network element reports the data to the NWDAF network element. Therefore, how to reduce the impact on the performance of the user plane network element when the user plane network element reports the data to the NWDAF network element is a technical problem that needs to be urgently resolved.

### SUMMARY

Embodiments of this application provide a data reporting method, an apparatus, and a system, to reduce impact on performance of a user plane network element when the user plane network element reports data to a data analytics network element.

Embodiments of this application provide the following technical solutions.

According to a first aspect, this application provides a data reporting method, including: A data analytics network element sends, to a first user plane network element, a first message that includes first reporting information. The first message is used to request the first user plane network element to report first data based on the first reporting information, the first data is data generated when the first user plane network element detects that a first event is triggered, the first reporting information includes first indication information and/or reporting time information, the first indication information is used by the first user plane network element to determine whether the reporting of the first data can be delayed, and the reporting time information indicates the first user plane network element to determine time for reporting the first data. The data analytics network element receives the first data from the first user plane network element.

In the data reporting method provided in this embodiment of this application, the data analytics network element provides the first reporting information for the first user plane network element. The first reporting information includes the first indication information and/or the reporting time information, and the first indication information is used by the first user plane network element to determine whether the reporting of the first data can be delayed. In this way, the first user plane network element can determine, based on an indication of the data analytics network element, whether the reporting of the first data can be delayed. When the reporting of the first data can be delayed, the first user plane network element may not need to immediately report the first data to the data analytics network element when detecting that the first event is triggered, but may autonomously choose to report the first data to a first data analytics network element when load of the first user plane network element is light. This reduces impact of the reported data on performance of the first user plane network element. The reporting time information indicates the first user plane network element to determine the time for reporting the first data. In this way, the first user plane network element can report the first data based on the reporting time indicated by the data analytics network element. This implements flexibility of data reporting, and reduces the impact of the reported data on the performance of the first user plane network element.

In a possible implementation of this application, the first message further includes a first event identifier, the first event identifier is associated with one or more user plane data types, and the first data is data that corresponds to the one or more user plane data types and that is generated when the first user plane network element detects that the first event is triggered.

In a possible implementation of this application, the first message further includes second indication information, the second indication information indicates the data analytics network element to request to obtain data of at least one of one or more user plane data types associated with the first event identifier, and correspondingly, that the data analytics network element receives the first data from the first user plane network element includes: The data analytics network element receives the data of the at least one user plane data type provided by the first user plane network element. In this case, the first data is data that corresponds to at least one user plane data type and that is generated by the first user plane network element when the first user plane network element detects that the first event is triggered.

In a possible implementation of this application, the first reporting information includes one or more of the following information: third indication information, indicating the first user plane network element to report the first data to the data analytics network element when load of the first user plane network element is less than a preset threshold; and a first load threshold, used by the first user plane network element to report the first data to the data analytics network element when determining that the load of the first user plane network element is less than the first load threshold.

In a possible implementation of this application, the reporting time information includes first start time information and first end time information, the first start time information is used by the first user plane network element to determine start time of reporting the first data to the data analytics network element, and the first end time information is used by the first user plane network element to determine first end time of reporting data to the data analytics network element. Alternatively, the reporting time information includes deadline information. The deadline information indicates the data analytics network element to start, before the deadline information, reporting the first data, or complete, before the deadline information, reporting the first data. Alternatively, the reporting time information includes second start time information and time length information. The first start time information is used by the first user plane network element to determine start time of reporting the first data to the data analytics network element, and the time length information is used by the first user plane network element to determine a time length of reporting data to the data analytics network element. Alternatively, the reporting time information includes time window information. The time window information is used by the first user plane network element to determine third start time and second end time that are of reporting data to the data analytics network element.

In a possible implementation of this application, in a time window determined based on the first start time information and the first end time information, the load of the first user plane network element is less than a preset load threshold.

In a possible implementation of this application, the method provided in this application further includes: The data analytics network element obtains a first analytics identifier from a consumer network element. The first analytics identifier is used by the data analytics network element to determine that the consumer network element requests an analytics result or a machine learning model corresponding to the first analytics identifier. The data analytics network element obtains the first event identifier based on the first analytics identifier. The data analytics network element obtains, from a first network element based on the first event identifier, information about one or more user plane network elements that support the first event identifier. The one or more user plane network elements include the first user plane network element.

In a possible implementation of this application, the data analytics network element has association information between each of one or more analytics identifiers and an event identifier, and correspondingly, that the data analytics network element obtains the first event identifier based on the first analytics identifier includes: The data analytics network element determines, based on the association information, an event identifier associated with the first analytics identifier as the first event identifier. The one or more analytics identifiers include the first analytics identifier.

In a possible implementation of this application, that the data analytics network element obtains the first event identifier based on the first analytics identifier includes: The data analytics network element determines the first analytics identifier as the first event identifier.

In a possible implementation of this application, the data analytics network element has association information between each of one or more data granularities and an event identifier, and that the data analytics network element obtains the first event identifier based on the first analytics identifier includes: The data analytics network element determines, based on the first analytics identifier, that data collected from the user plane network element is a first data granularity. The data analytics network element determines an event identifier that is in the association information and that is associated with the first data granularity as the first event identifier. The first data granularity belongs to the one or more data granularities.

In a possible implementation of this application, that the data analytics network element obtains, from a first network element based on the first event identifier, information about one or more user plane network elements that support the first event identifier includes: The data analytics network element sends, to the first network element, a second message that carries the first event identifier. The second message is used to request the first network element to provide information about a user plane network element that supports the first event identifier. The data analytics network element receives information about the one or more user plane network elements from the first network element.

In a possible implementation of this application, the first message further includes information about a first terminal, and the first message is used to request the first data corresponding to the first terminal.

In a possible implementation of this application, when the data analytics network element further requests, from the first user plane network element by using a third message, second data corresponding to a second terminal, and the third message further includes the first reporting information, that the data analytics network element receives the first data from the first user plane network element includes: The data analytics network element receives a first response sent by the first user plane network element. The first response includes the first data corresponding to the first terminal and the second data corresponding to the second terminal.

According to a second aspect, an embodiment of this application provides a data reporting method, including: A first user plane network element receives, from a data analytics network element, a first message that includes first reporting information. The first message is used to request the first user plane network element to report first data based on the first reporting information, the first data is data generated when the first user plane network element detects that a first event is triggered, the first reporting information includes first indication information and/or reporting time information, the first indication information is used by the first user plane network element to determine whether the reporting of the first data can be delayed, and the reporting time information indicates the first user plane network element to determine time for reporting the first data. The first user plane network element obtains the first data. The first user plane network element reports the first data to the data analytics network element based on the first reporting information.

In a possible implementation of this application, the first message further includes a first event identifier, the first event identifier is associated with one or more user plane data types, and the first data is data that corresponds to the one or more user plane data types and that is generated when the first user plane network element detects that the first event is triggered.

In a possible implementation of this application, the first message further includes second indication information, the second indication information indicates the data analytics network element to request to obtain data of at least one of one or more user plane data types associated with the first event identifier, and correspondingly, that the first user plane network element obtains the first data includes: The first user plane network element obtains, based on the second indication information, the data of the at least one user plane data type as the first data when the first event is triggered.

In a possible implementation of this application, the first reporting information includes one or more of the following information: third indication information, indicating the first user plane network element to report the first data to the data analytics network element when load of the first user plane network element is less than a preset threshold; and a first load threshold, used by the first user plane network element to report the first data to the data analytics network element when determining that the load of the first user plane network element is less than the first load threshold, and correspondingly, that the first user plane network element reports the first data to the data analytics network element based on the first reporting information includes: The first user plane network element reports the first data to the data analytics network element based on the third indication information and/or the first load threshold.

In a possible implementation of this application, the reporting time information includes first start time information and first end time information, the first start time information is used by the first user plane network element to determine start time of reporting the first data to the data analytics network element, and the first end time information is used by the first user plane network element to determine first end time of reporting data to the data analytics network element. Alternatively, the reporting time information includes deadline information. The deadline information indicates the data analytics network element to start, before the deadline information, reporting the first data, or complete, before the deadline information, reporting the first data. Alternatively, the reporting time information includes second start time information and time length information. The first start time information is used by the first user plane network element to determine start time of reporting the first data to the data analytics network element, and the time length information is used by the first user plane network element to determine a time length of reporting data to the data analytics network element. Alternatively, the reporting time information includes time window information. The time window information is used by the first user plane network element to determine third start time and second end time that are of reporting data to the data analytics network element.

In a possible implementation of this application, the method provided in this application further includes: The first user plane network element sends related information of the first user plane network element to a first network element. The related information of the first user plane network element includes at least one or more event identifiers supported by the first user plane network element.

In a possible implementation of this application, the step in which the first user plane network element sends the related information of the first user plane network element to the first network element in this application further includes: The first user plane network element sends, to the first network element, an identifier of a terminal served by the first user plane network element.

In a possible implementation of this application, the method provided in this application further includes: The first user plane network element receives a third message from the data analytics network element, and when the third message is used to request, from the first user plane network element, second data corresponding to a second terminal, and the third message further includes the first reporting information, that the first user plane network element reports the first data to the data analytics network element based on the first reporting information includes: The first user plane network element reports a first response to the data analytics network element based on the first reporting information. The first response includes the second data corresponding to the second terminal and the first data corresponding to the first terminal.

According to a third aspect, an embodiment of this application provides a communication method, including: A first network element receives, from a data analytics network element, a second message that carries a first event identifier. The first event identifier is associated with one or more user plane data types. The second message is used to request the first network element to provide information about a user plane network element that supports the first event identifier. The first network element determines, based on the first event identifier, information about one or more user plane network elements that support the first event identifier. The first network element sends the information about the one or more user plane network elements to the data analytics network element.

In a possible implementation of this application, that the first network element provides the information about the one or more user plane network elements to the data analytics network element may further include: The first network element provides related information of the one or more user plane network elements for the data analytics network element. The related information of the user plane network element includes at least one or more event identifiers supported by the user plane network element. Optionally, the related information of the user plane network element further includes information about a serving area served by the user plane network element or information about a network slice, and a network element type of the user plane network element. In this way, the data analytics network element determines whether each user plane network element supports the first event identifier, and may determine, based on the information about the serving area served by the user plane network element or the information about the network slice, and the network element type of the user plane network element, that the user plane network element is a user plane network element that meets a requirement of providing data.

In a possible implementation of this application, the first network element may be an NRF network element, an SMF network element, or a UDM network element.

In a possible implementation of this application, related information of the one or more user plane network elements is configured in the first network element, and the related information includes the one or more event identifiers supported by the user plane network element and information about the user plane network element (for example, an identifier or address information).

In a possible implementation of this application, before that a first network element receives, from a data analytics network element, a second message that carries a first event identifier, the method provided in this embodiment of this application further includes: The first network element receives a third message from any user plane network element. The third message includes the related information of the user plane network element, the related information includes the one or more event identifiers supported by the user plane network element and an identifier of the user plane network element, and the one or more event identifiers include the first event identifier. In this way, the user plane network element can register the related information of the user plane network element with the first network element.

In a possible implementation of this application, the first network element is a session management network element or a unified data management network element that serves the first terminal, the one or more user plane network elements include the first user plane network element that serves the first terminal, and that the first network element receives the third message from the first user plane network element includes: The first network element receives the third message from the first user plane network element in a session establishment or update procedure of the first terminal.

In a possible implementation of this application, the first network element is an SMF network element or a UDM that serves the first terminal, and that the first network element receives the third message from the first user plane network element includes: When the first network element determines that the first network element does not have the related information of the first user plane network element, the first network element sends a request message to the first user plane network element. The request message is used to request the first user plane network element to provide the related information of the first user plane network element for the first network element. Because there may be a case in which the user plane network element does not register the related information of the user plane network element with the first network element, in this solution, the user plane network element can provide the related information of the first user plane network element for the first network element based on triggering of the SMF network element or the UDM. For example, the first network element determines that the data analytics network element needs to query whether the first user plane network element supports the first event identifier. In this case, the first network element determines that there is the related information of the first user plane network element locally, or finds that the first user plane network element does not register the related information of the first user plane network element with the first network element. Therefore, the first network element may be triggered to provide the related information of the first user plane network element. Alternatively, the first network element may determine, based on triggering in another manner, that there is not the related information of the first user plane network element.

In a possible implementation of this application, the first network element is the session management network element or the unified data management network element that serves the first terminal, the first terminal is served by a second user plane network element, the second message further includes an identifier of the first terminal, and the method provided in this embodiment of this application further includes: When an event identifier supported by the second user plane network element does not include the first event identifier, or the event identifier supported by the second user plane network element includes a part of event identifiers in the first event identifier, the first network element feeds back a fourth message to the data analytics network element. The fourth message indicates that information about the user plane network element that supports the first event identifier is not queried. In this way, the first network element determines, based on the fourth message, that there is no information about the user plane network element that supports the first event identifier, to feed back corresponding information to a consumer network element, for example, reject an analytics result or an ML model that is requested by the consumer network element.

In a possible implementation of this application, the first network element is the session management network element that serves the first terminal, the first terminal is served by the second user plane network element, the second message further includes the identifier of the first terminal, and that the first network element determines, based on the first event identifier, identifiers of one or more user plane network elements that support the first event identifier includes: When the event identifier supported by the second user plane network element does not include the first event identifier, or the event identifier supported by the second user plane network element includes the part of event identifiers in the first event identifier, the first network element determines, for the first terminal, a third user plane network element that supports the first event identifier. The third user plane network element belongs to one or more user plane network elements. In this way, the third user plane network element may be reselected for the first terminal, so that the third user plane network element provides data of one or more user plane data types associated with the first event identifier.

According to a fourth aspect, an embodiment of this application provides a communication apparatus. The communication apparatus can implement the method according to any one of the first aspect or the possible implementations of the first aspect, and therefore can also implement beneficial effects according to any one of the first aspect or the possible implementations of the first aspect. The communication apparatus may be a data analytics network element, or may be an apparatus that can support a data analytics network element in implementing the method according to any one of the first aspect or the possible implementations of the first aspect, for example, a chip used in the data analytics network element. The communication apparatus may implement the foregoing method by using software or hardware, or by executing corresponding software by using hardware.

In an example, the communication apparatus may include a processing unit and a communication unit. The communication unit is configured to perform receiving/sending related steps performed by the data analytics network element according to any one of the first aspect or the possible implementations of the first aspect. The processing unit is configured to perform processing related steps performed by the data analytics network element according to any one of the first aspect or the possible implementations of the first aspect.

For example, when the communication apparatus is a chip or a chip system in the data analytics network element, the processing unit may be a processor, and the communication unit may be a communication interface. For example, the communication interface may be an input/output interface, a pin, a circuit, or the like. The processing unit executes instructions stored in a storage unit, to enable the data analytics network element to implement the data reporting method described according to any one of the first aspect or the possible implementations of the first aspect. The storage unit may be a storage unit (for example, a register or a cache) in the chip, or may be a storage unit (for example, a read-only memory or a random access memory) that is in the data analytics network element and that is outside the chip.

According to a fifth aspect, an embodiment of this application provides a communication apparatus. The communication apparatus can implement the method according to any one of the second aspect or the possible implementations of the second aspect, and therefore can also implement the beneficial effects according to any one of the second aspect or the possible implementations of the second aspect. The communication apparatus may be a first user plane network element, or may be an apparatus that can support a first user plane network element in implementing the method according to any one of the second aspect or the possible implementations of the second aspect, for example, a chip used in the first user plane network element. The communication apparatus may implement the foregoing method by using software or hardware, or by executing corresponding software by using hardware.

In an example, the communication apparatus may include a processing unit and a communication unit. The communication unit is configured to perform receiving/sending related steps performed by the first user plane network element according to any one of the second aspect or the possible implementations of the second aspect. The processing unit is configured to perform processing related steps performed by the first user plane network element according to any one of the second aspect or the possible implementations of the second aspect.

For example, when the communication apparatus is a chip or a chip system in the first user plane network element, the processing unit may be a processor, and the communication unit may be a communication interface. For example, the communication interface may be an input/output interface, a pin, a circuit, or the like. The processing unit executes instructions stored in a storage unit, to enable the first user plane network element to implement the data reporting method described according to any one of the second aspect or the possible implementations of the second aspect. The storage unit may be a storage unit (for example, a register or a cache) in the chip, or may be a storage unit (for example, a read-only memory or a random access memory) that is in the first user plane network element and that is outside the chip.

According to a sixth aspect, an embodiment of this application provides a communication apparatus. The communication apparatus can implement the method according to any one of the third aspect or the possible implementations of the third aspect, and therefore can also implement beneficial effects according to any one of the third aspect or the possible implementations of the third aspect. The communication apparatus may be a first network element, or may be an apparatus that can support a first network element in implementing the method according to any one of the third aspect or the possible implementations of the third aspect, for example, a chip used in the first network element. The communication apparatus may implement the foregoing method by using software or hardware, or by executing corresponding software by using hardware.

In an example, the communication apparatus may include a processing unit and a communication unit. The communication unit is configured to perform receiving/sending related steps performed by the first network element according to any one of the third aspect or the possible implementations of the third aspect. The processing unit is configured to perform processing related steps performed by the first network element according to any one of the third aspect or the possible implementations of the third aspect.

For example, when the communication apparatus is a chip or a chip system in the first network element, the processing unit may be a processor, and the communication unit may be a communication interface. For example, the communication interface may be an input/output interface, a pin, a circuit, or the like. The processing unit executes instructions stored in a storage unit, to enable the first network element to implement the data reporting method described according to any one of the third aspect or the possible implementations of the third aspect. The storage unit may be a storage unit (for example, a register or a cache) in the chip, or may be a storage unit (for example, a read-only memory or a random access memory) that is in the first network element and that is outside the chip.

According to a seventh aspect, an embodiment of this application provides a computer-readable storage medium. The computer-readable storage medium stores a computer program or instructions. When the computer program or the instructions are run on a computer, the computer is enabled to perform the data reporting method described according to any one of the first aspect or the possible implementations of the first aspect. The computer may be a data analytics network element.

According to an eighth aspect, an embodiment of this application provides a computer-readable storage medium. The computer-readable storage medium stores a computer program or instructions. When the computer program or the instructions are run on a computer, the computer is enabled to perform the data analytics method described according to any one of the second aspect or the possible implementations of the second aspect. The computer may be a first user plane network element.

According to a ninth aspect, an embodiment of this application provides a computer-readable storage medium. The computer-readable storage medium stores a computer program or instructions. When the computer program or the instructions are run on a computer, the computer is enabled to perform the data reporting method according to any one of the third aspect or the possible implementations of the third aspect. The computer may be a first network element.

According to a tenth aspect, an embodiment of this application provides a computer program product including instructions. When the instructions are run on a computer, the computer is enabled to perform the data reporting method described according to any one of the first aspect or the possible implementations of the first aspect.

According to an eleventh aspect, an embodiment of this application provides a computer program product including instructions. When the instructions are run on a computer, the computer is enabled to perform the data reporting method according to any one of the second aspect or the possible implementations of the second aspect.

According to a twelfth aspect, an embodiment of this application provides a computer program product including instructions. When the instructions are run on a computer, the computer is enabled to perform the data reporting method according to any one of the third aspect or the possible implementations of the third aspect.

According to a thirteenth aspect, an embodiment of this application provides a communication apparatus, configured to implement the methods according to the possible designs of any one of the first aspect to the third aspect. The communication apparatus may be the foregoing data analytics network element, an apparatus including the foregoing data analytics network element, or a component (for example, a chip) used in the data analytics network element. Alternatively, the communication apparatus may be the foregoing first network element, or an apparatus including the foregoing first network element, or the communication apparatus may be a component (for example, a chip) used in the foregoing first network element. Alternatively, the communication apparatus may be the foregoing first user plane network element, or an apparatus including the foregoing first user plane network element, or the communication apparatus may be a component (for example, a chip) used in the first user plane network element. The communication apparatus includes a corresponding module or unit for implementing the foregoing method. The module or unit may be implemented by hardware or software, or by executing corresponding software by using hardware. The hardware or the software includes one or more modules or units corresponding to the foregoing functions.

It should be understood that the communication apparatus described according to the thirteenth aspect may further include a bus and a memory. The memory is configured to store code and data. Optionally, at least one processor, a communication interface, and the memory are coupled to each other.

According to a fourteenth aspect, an embodiment of this application provides a communication apparatus. The communication apparatus includes a communication interface and at least one processor. The at least one processor communicates with the communication interface, and when the communication apparatus runs, the at least one processor executes computer-executable instructions or a program stored in a memory, so that the communication apparatus performs the method according to the first aspect or any possible implementations of the first aspect. For example, the communication apparatus may be a data analytics network element, or a chip used in the data analytics network element.

According to a fifteenth aspect, an embodiment of this application provides a communication apparatus. The communication apparatus includes a communication interface and at least one processor. The at least one processor communicates with the communication interface, and when the communication apparatus runs, the at least one processor executes computer-executable instructions or a program stored in a memory, so that the communication apparatus performs the method according to the second aspect or the possible implementations of the second aspect. For example, the communication apparatus may be a first user plane network element, or a chip used in the first user plane network element.

According to a sixteenth aspect, an embodiment of this application provides a communication apparatus. The communication apparatus includes a communication interface and at least one processor. The at least one processor communicates with the communication interface, and when the communication apparatus runs, the at least one processor executes computer-executable instructions or a program stored in a memory, so that the communication apparatus performs the method according to the third aspect or the possible implementations of the third aspect. For example, the communication apparatus may be a first network element or a chip used in the first network element.

It should be understood that the communication apparatus described according to any one of the fourteenth aspect to the sixteenth aspect may further include a memory, and the memory may be replaced with a storage medium. This is not limited in embodiments of this application.

In a possible implementation, the memory described according to any one of the fourteenth aspect to the sixteenth aspect may be a memory inside the communication apparatus. Certainly, the memory may alternatively be located outside the communication apparatus, but the at least one processor can still execute the computer-executable instructions or the program stored in the memory.

According to a seventeenth aspect, an embodiment of this application provides a communication apparatus. The communication apparatus includes one or more modules, configured to implement the method according to any one of the first aspect, the second aspect, and the third aspect. The one or more modules may correspond to the steps in the method according to any one of the first aspect, the second aspect, and the third aspect.

According to an eighteenth aspect, an embodiment of this application provides a chip system. The chip system includes at least one processor, and the processor is configured to read and execute a computer program stored in a memory, to perform the method according to any one of the first aspect or the possible implementations of the first aspect.

According to a nineteenth aspect, an embodiment of this application provides a chip system. The chip system includes at least one processor, and the processor is configured to read and execute a computer program stored in a memory, to perform the method according to any one of the second aspect or the possible implementations of the second aspect.

According to a twentieth aspect, an embodiment of this application provides a chip system. The chip system includes at least one processor, and the processor is configured to read and execute a computer program stored in a memory, to perform the method according to any one of the third aspect or the possible implementations of the third aspect.

Optionally, the chip system may be a single chip or a chip module including a plurality of chips.

Optionally, the chip system further includes a memory. The memory and the processor are connected to the memory through a circuit or a wire.

Optionally, the chip system further includes a communication interface. The communication interface is configured to communicate with another module outside the chip.

According to a twenty-first aspect, an embodiment of this application provides a communication system. The communication system includes a data analytics network element and a first user plane network element. The data analytics network element is configured to perform the method according to any one of the first aspect or the possible implementations of the first aspect, and the first user plane network element is configured to perform the method according to any one of the first aspect or the possible implementations of the first aspect.

Optionally, the communication system may further include one or more first network elements (for example, an NRF network element, a session management network element, or a unified data management network element), configured to perform the method according to any one of the first aspect or the possible implementations of the first aspect.

Any apparatus, computer storage medium, computer program product, chip, or communication system provided in the foregoing is configured to perform the corresponding method provided above. Therefore, for beneficial effects that can be achieved, refer to the beneficial effects of the corresponding solution in the corresponding method provided above. Details are not described herein again.

### BRIEF DESCRIPTION OF DRAWINGS

FIG. 1 is a schematic diagram of an architecture of a communication system according to an embodiment of this application;
FIG. 2 is a schematic diagram of a 5G network architecture according to an embodiment of this application;
FIG. 3 is a schematic diagram of another 5G network architecture according to an embodiment of this application;
FIG. 4.1 and FIG. 4.2 each are a schematic flowchart of obtaining data from a UPF network element in a conventional technology;
FIG. 5 is a schematic flowchart of a data reporting method according to an embodiment of this application;
FIG. 6 is a schematic flowchart of another data reporting method according to an embodiment of this application;
FIG. 7 is a schematic flowchart of a specific embodiment of a data reporting method according to an embodiment of this application;
FIG. 8A and FIG. 8B are a schematic flowchart of a specific embodiment of another data reporting method according to an embodiment of this application;
FIG. 9 is a schematic flowchart of a specific embodiment of still another data reporting method according to an embodiment of this application;
FIG. 10 is a schematic diagram of a structure of a communication apparatus according to an embodiment of this application;
FIG. 11 is a schematic diagram of a structure of a communication device according to an embodiment of this application; and
FIG. 12 is a schematic diagram of a structure of a chip according to an embodiment of this application.

### DESCRIPTION OF EMBODIMENTS

To clearly describe the technical solutions in embodiments of this application, words such as "first" and "second" are used in embodiments of this application to distinguish between same items or similar items that have basically a same function or purpose. For example, a first network element and a second network element are merely intended to distinguish between different network elements, and are not intended to limit a sequence thereof. A person skilled in the art may understand that the terms such as "first" and "second" do not limit a quantity or an execution sequence, and the terms such as "first" and "second" do not indicate a definite difference.

It should be noted that, in this application, terms such as "an example" or "for example" are used to represent an example, an instance, or an illustration. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

In this application, at least one means one or more, and a plurality of means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally represents an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

The technical solutions in this application may be applied to various communication systems, for example, a long term evolution (long time evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a public land mobile network (public land mobile network, PLMN) system, a device-to-device (device-to-device, D2D) network system, a machine-to-machine (machine-to-machine, M2M) network system, a 5G (the 5th generation, 5G) communication system, and the like.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

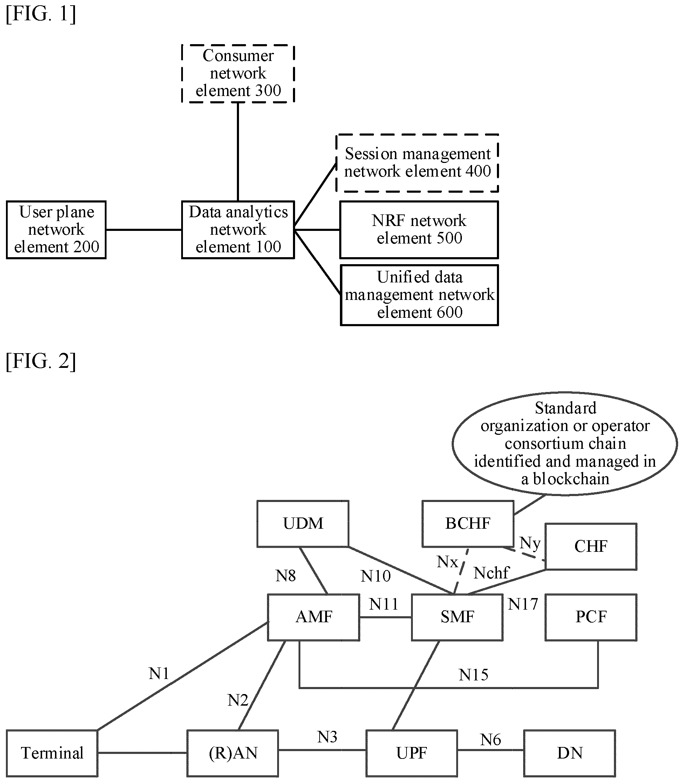

As shown in FIG. 1, an embodiment of this application provides a communication system. The communication system includes a data analytics network element 100 and a user plane network element 200. The data analytics network element 100 may communicate with the user plane network element 200.

Optionally, the system shown in FIG. 1 may further include one or more of a consumer network element 300, a session management network element 400, an NRF network element 500, and a unified data management network element 600.

The data analytics network element 100 may obtain needed user plane data from the user plane network element 200, to perform data analytics or train an ML model based on the user plane data. Specifically, the data analytics network element 100 may obtain the needed user plane data from the user plane network element 200 based on requirement information of the consumer network element 300.

In embodiments of this application, the communication system shown in FIG. 1 may be used in a 5G network architecture or another future network architecture. This is not limited in embodiments of this application.

For example, the communication system shown in FIG. 1 is applicable to the 5G network architecture. In a 5G core network (5G core, 5GC), a network element or an entity corresponding to the user plane network element may be a user plane function (User plane function, UPF) network element, and a network element or entity corresponding to a session management network element may be a session management function (Session Management Function, SMF) network element. In a 5G network, the data analytics network element in embodiments of this application may be a network data analytics function (network data analytics function, NWDAF) network element in the 5GC, may be a management data analytics function (Management Data Analytics Function, MDAF) network element of a network management system, or may even be a data analytics network element on a radio access network (Radio Access Network, RAN) side.

As shown in FIG. 2, in addition to the foregoing network elements, the 5G network architecture may further include: an access and mobility management function (access and mobility management function, AMF) network element, a unified data management (unified data management, UDM) network element, a policy control function (policy control function, PCF) network element, an application function (application function, AF) network element, a data network (data network, DN) network element, a network slice selection function (network slice selection function, NSSF) network element, a network exposure function (network exposure function, NEF) network element, a user repository (user data repository, UDR) network element, and a network repository function (network repository function, NRF) network element, and a operation, administration, and maintenance (operation and maintenance) (operation, administration, and maintenance, OAM) network element (which may also be referred to as an operation, administration, and maintenance network element). The NRF network element is mainly used to discover a network element (for example, the AMF network element, the UPF network element, or the NWDAF network element).

A terminal communicates with the AMF network element through an N1 interface (N1 for short). The AMF entity communicates with the SMF network element through an N11 interface (N11 for short). The SMF network element communicates with one or more UPF network elements through an N4 interface (N4 for short). Any two of the one or more UPF network elements communicate with each other through an N9 interface (N9 for short). The UPF network element communicates, through an N6 interface (N6 for short), with a data network (data network, DN) managed and controlled by the AF network element. The terminal accesses a network through an access network element (for example, a RAN network element), and the RAN network element communicates with the AMF network element through an N2 interface (N2 for short). The SMF network element communicates with the PCF network element through an N7 interface (N7 for short), and the PCF network element communicates with the AF network element through an N5 interface. The RAN network element communicates with the UPF network element through an N3 interface (N3 for short). Any two AMF network elements communicate with each other through an N14 interface (N14 for short). The SMF network element communicates with the UDM through an N10 interface (N10 for short). The AMF network element communicates with the AUSF through an N12 interface (N12 for short). The AMF network element communicates with the UDM network element through an N8 interface (N8 for short).

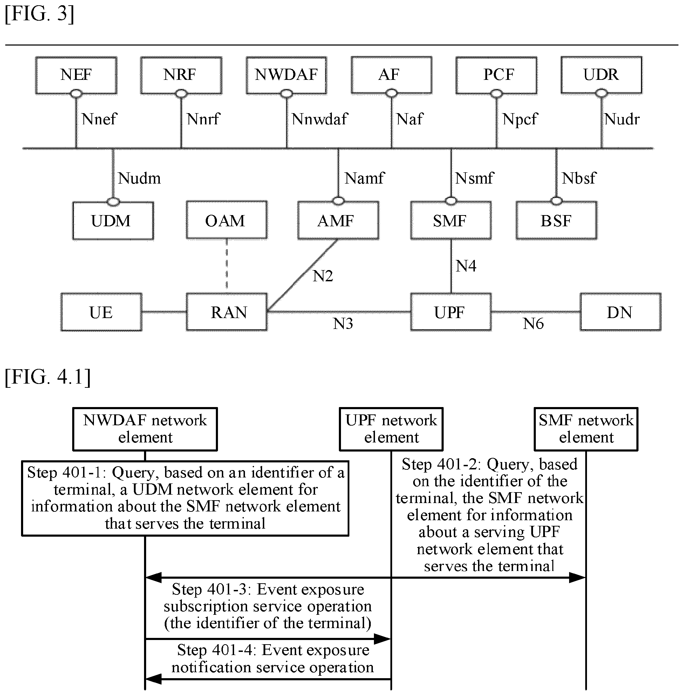

It should be understood that, in a network architecture shown in FIG. 2, control plane network elements may alternatively interact with each other through a service-based interface. For example, as shown in FIG. 3, an AMF network element, an SMF network element, a UDM network element, and a PCF network element interact with each other through a service-based interface. For example, an external service-based interface exhibited by the AMF network element may be Namf. An external service-based interface exhibited by the SMF network element may be Nsmf. An external service-based interface exhibited by the UDM network element may be Nudm. An external service-based interface exhibited by the PCF network element may be Npcf. An external service-based interface exhibited by the CHF network element may be Nchf (not shown in FIG. 3). An external service-based interface exhibited by the NWDAF network element may be Nnwdaf. An external service-based interface exhibited by the BSF network element may be Nbsf. An external service-based interface exhibited by the NRF network element may be Nnrf. It should be understood that for related descriptions of names of various service-based interfaces, reference may be made to a diagram of a 5G system architecture (5G system architecture) in the standard 23501. Details are not described herein.

It should be noted that FIG. 2 or FIG. 3 merely shows, for example, one UPF network element and one SMF network element. Certainly, FIG. 2 or FIG. 3 may include a plurality of UPF network elements and a plurality of SMF network elements, for example, include an SMF network element 1 and an SMF network element 2. This is not specifically limited in embodiments of this application.

It should be noted that the access network element, the AMF network element, the SMF network element, the UDM network element, the UPF network element, the PCF network element, and the like in FIG. 2 or FIG. 3 are merely names, and the names constitute no limitation on the devices. In the 5G network and another future network, network elements or entities corresponding to the RAN network element, the AMF network element, the SMF network element, the UDM network element, the UPF network element, and the PCF network element may have other names. This is not specifically limited in this embodiment of this application. For example, the UDM network element may alternatively be replaced with a home subscriber server (home subscriber server, HSS), a user subscription database (user subscription database, USD), a database entity, or the like. This is uniformly described herein, and details are not described subsequently. Meanings of network elements in embodiments of this application are as follows:

Network elements (Network Function, NF) include, for example, the PCF network element, the AMF network element, the SMF network element, the NEF network element, the AF network element, and the NWDAF network element.

The NWDAF network element is used for a network data analytics function. The NWDAF network element has data collection, training, analytics, and reasoning functions, and may be configured to: collect related data from a network network element, a third-party service server, a terminal, or a network management system, perform analytics and training based on the related data, and provide a data analytics result for the network network element, the third-party service server, the terminal, or the network management system. The data analytics result may assist the PCF network element in determining a service quality parameter of a service, assist the SMF network element in performing traffic routing, assist the PCF network element in determining a background traffic transmission policy, or the like.

NRF network element provides registration and discovery capabilities of a network element in the 5G network. For example, related information of the UPF network element may be registered with the NRF network element. The NWDAF network element may discover information about one or more UPF network elements from the NRF network element.

The UDM network element performs subscription management, access authorization, authentication information generation, and the like on a user.

The SMF network element has a session management function and provides session management (such as session establishment, modification, and release), IP address allocation and management, and UPF selection and control for a session of a terminal.

The UDM network element and the SMF network element in this embodiment of this application may further store related information of a UPF network element that serves the terminal.

The UPF network element provides user plane functions such as user plane data forwarding and processing, connection to a DN, session anchor, and QoS policy execution.

The terminal (terminal) may be also referred as user equipment (user equipment, UE), and may include various handheld devices, vehicle-mounted devices, wearable devices, and computing devices that have a wireless communication function, or other processing devices connected to a wireless modem. The terminal may further include a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, user equipment (user equipment, UE), a mobile station (mobile station, MS), a terminal device (terminal device), relay user equipment, or the like. The relay user equipment may be, for example, a 5G residential gateway (residential gateway, RG). For ease of description, in this application, the devices mentioned above are collectively referred to as terminals.

Alternatively, the terminal may be a terminal in a plurality of vertical industry application fields such as an Internet of Things terminal, a port, a smart factory, railway transportation, logistics, an unmanned aerial vehicle, an unmanned vehicle, and the like, for example, a mobile robot (Mobile Robot), an automated guided vehicle (Automated Guided Vehicle, AGV), an unmanned vehicle, a control device and a sensor on a train, a control device and a sensor (Sensor) deployed in a factory, or the like.

For example, in embodiments of this application, the terminal may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with another device such as smartphones, for example, various smart bands, or smart jewelry for monitoring physical signs. The terminal may alternatively be a sensor device used in a factory.

In Releases R16 and R17, data analytics types that can be provided by the NWDAF network element are defined, such as a user service experience analytics result, a network element load analytics result, a terminal mobility analytics result, and the like. Each data analytics type can be identified by one analytics identifier (Analytics ID). For example, Analytics ID = "Service Experience" represents the service experience analytics result. Analytics ID = "NF load information" represents the network element load analytics result. Analytics ID = "UE Mobility" represents the terminal mobility analytics result.

To provide the foregoing analytics results, the NWDAF network element needs to collect corresponding data from different network elements on the network. Each Analytics ID corresponds to a group of data types to be collected. For example, the NWDAF network element provides the user service experience analytics result (that is, Analytics ID = "Service Experience"). The NWDAF network element needs to collect service experience related data from the AF network element, collect network data of a quality of service (Quality of Service, QoS) flow (flow) level from a core network element (for example, the AMF network element/the SMF network element/the UPF network element), and collect QoS related data of a terminal (UE) level from an OAM network element. The data collected by the NWDAF network element from the UPF network element includes content shown in the following Table 1.

**Table 1 Data collected by the NWDAF network element from the UPF network element**

| Data analytics type | UPF data type | Meaning | Level |
|---|---|---|---|
| Service experience | Quality of service flow bit rate (QoS flow Bit Rate) | Observed uplink and downlink flow bit rates | QoS flow |
| | QoS flow packet delay (QoS flow Packet Delay) | Observed uplink and downlink flow packet delays | QoS flow |
| | Number of packet transmissions (Packet transmission) | Observed number of packet transmissions | QoS flow |
| | Number of packet retransmissions (Packet retransmission) | Observed number of packet retransmissions | QoS flow |

It can be learned that the foregoing data is UPF data at a QoS flow level. In addition, the NWDAF network element may further collect data of another level from the UPF network element, for example, a network element (NF) level, an application (Application) level, a terminal level, and the like. An example is shown in Table 2.

**Table 2 Data of the another level collected by the NWDAF network element from the UPF network element**

| Data analytics type | UPF data type | Meaning | Level |
|---|---|---|---|
| Network element load (Analytics ID = "NF load information") | Traffic usage report | Total traffic used by a UPF user plane | NF |
| Hotspot analytics (Analytics ID= "Dispersion Analytics") | Data Volume UL/DL | Total UE data volume exchanged for each application on the UPF network element | Application |
| | Data Volume UL/DL | Total data volume of all service interaction for a terminal on the UPF network element | Terminal |

After receiving a data collection request of the NWDAF network element directly or indirectly (for example, by using the SMF network element), the UPF network element collects corresponding data and sends the data to the NWDAF network element in a direct or indirect manner.

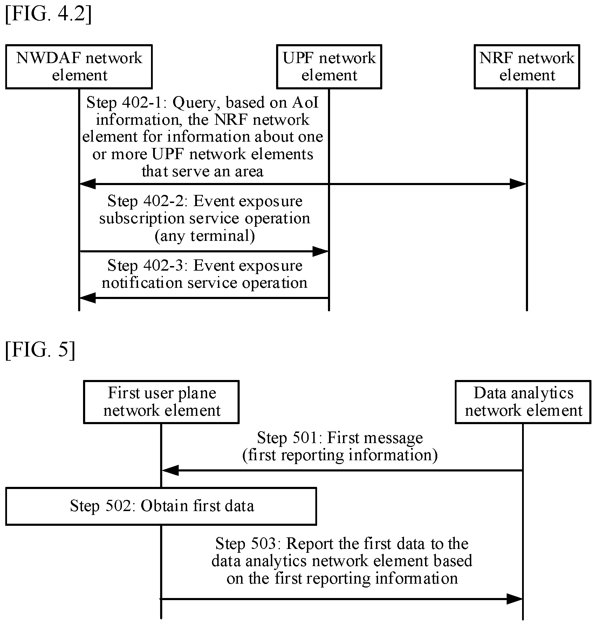

Before embodiments of this application are described, an example in which the data analytics network element is the NWDAF network element and the user plane network element is the UPF network element is used. Two manners in which the NWDAF network element collects data from the UPF network element are first described, as shown in FIG. 4.1 and FIG. 4.2.

FIG. 4.1 is a procedure of collecting UPF data of a specific terminal (for example, one or more terminals). As shown in FIG. 4.1, the method includes the following steps.

Step 401-1: An NWDAF network element queries, based on an identifier (for example, an SUPI) of the terminal, a UDM network element for information about an SMF network element that serves the terminal.

The identifier of the foregoing terminal may be an identifier of one or more terminals. Specifically, when determining to obtain user plane data of the terminal on a user plane network element, the NWDAF network element performs step 401-1.

It may be understood that the UDM network element stores a mapping relationship between an identifier of a terminal and information about an SMF network element that serves the terminal. The mapping information stored in the UDM network element may be registered with the UDM network element by the SMF network element in a session establishment or session modification procedure of the terminal. Optionally, the information about the SMF network element may be an IP address of the SMF network element and an identifier of the SMF network element.

For example, the identifier of the terminal in this embodiment of this application may be one or more of the following: an internet protocol (internet protocol, IP) address, a subscription permanent identifier (subscription permanent identifier, SUPI), a permanent equipment identifier (permanent equipment identifier, PEI), a generic public subscription identifier (generic public subscription identifier, GPSI), an international mobile subscriber identifier (international mobile subscriber identifier, IMSI), an international mobile equipment identifier (international mobile equipment identifier, IMEI), an IP address, and a mobile station subscriber international integrated service digital network number (mobile station subscriber international integrated service digital network number, MSISDN). For the identifier of the terminal in the following embodiments, refer to the descriptions herein. Details are not described subsequently again.

Step 401-2: The NWDAF network element queries, based on the identifier of the terminal, the SMF network element for information about a serving UPF network element that serves the terminal.

Optionally, the SMF network element stores a mapping relationship between an identifier of one or more terminals served by the SMF network element and information about a UPF network element that serves each terminal. For example, the information about the UPF network element may be an IP address of the UPF network element and an ID of the UPF network element.

Step 401-3: The NWDAF network element sends a subscription message to the serving UPF network element by using an event exposure subscription (Nupf_EventExposure_Subscribe) service operation, and correspondingly, the serving UPF network element receives the Nupf_EventExposure_Subscribe service operation from the NWDAF network element. The Nupf_EventExposure_Subscribe service operation is used to subscribe to and obtain data of the terminal from the serving UPF network element.

The subscription message carries the following parameters:
- Event identifier (Event ID): One Event ID corresponds to one user plane data type set (for example, QoS flow Bit Rate, QoS flow Packet Delay, Packet transmission, Packet retransmission, and the like), and is used to represent data of a group of user plane data types requested by the NWDAF network element.
- Event filtering information (Event Filter) is used to restrict a scope of data collected by the UPF network element. For example, when Event Filter = S-NSSAI, it represents that the NWDAF network element wants to obtain data of the terminal in a specific slice (that is, a slice indicated by S-NSSAI); or when Event Filter = App ID, it represents that the NWDAF wants to obtain data of the terminal in a specific application indicated by App ID.
- Target of event reporting (Target of Event Reporting) indicates to collect data of specific terminals. For example, when Target of Event Reporting = UE ID, it represents that the NWDAF network element wants to collect data of a specific terminal indicated by UE ID. For example, when Event Filter = AoI and Target of Event Reporting = UE ID, it represents that the NWDAF network element wants to collect data of a terminal identified by UE ID in a data collection range specified by AoI.
- Event reporting information (Event Reporting Information) indicates how the UPF network element reports data to the NWDAF network element. For example, the event reporting information includes periodic reporting indication information and a periodicity, indicating that the UPF network element reports the data to the NWDAF network element periodically.

In an example, the NWDAF network element may subscribe to data from the UPF network element by using the SMF network element. The NWDAF network element sends an Nsmf_EventExposure_Subscribe service operation (Event ID, Event Filter, Target of Event Reporting, and Event Reporting Information in the foregoing) to the SMF network element, and the SMF network element further sends an Nupf_EventExposure_Subscribe service operation or an N4 message (Event ID, Event Filter, Target of Event Reporting, and Event Reporting Information in the foregoing) to the UPF network element.

It may be understood that, in step 401-3, a non-subscription message may be an alternative to the subscription message.

Step 401-4: The UPF network element sends the collected data of the terminal to the NWDAF network element by using an event exposure notification (Nupf_EventExposure_Notify) service operation, and correspondingly, the NWDAF network element may obtain the data of the terminal by using the Nupf_EventExposure_Notify service operation. Optionally, the UPF network element may further send the collected data of the terminal to the NWDAF network element by using a common non-service-based interface (similar to an N4 interface) message.

In an example, the UPF network element may send the data of the terminal to the NWDAF network element by using the SMF network element. The UPF network element sends the Nupf_EventExposure_Notify service operation or an N4 message (the data of the terminal) to the SMF network element, and the SMF network element further sends an Nsmf_EventExposure_Notify service operation (the data of the terminal) to the NWDAF network element.

In addition, a second manner in which the NWDAF network element collects data from the UPF network element is to collect data of all terminals or a part of terminals in an area of interest (Area of Interest, AoI). A procedure of the second manner is shown in FIG. 4.2.

Step 402-1: The NWDAF network element queries, based on AoI (list of TA/cell), an NRF network element for information about one or more UPF network elements that serve the area.

The NRF network element stores registration information of a network element, that is, an NF profile, including a network element type (NF type), a network element identifier (NF instance ID), a network element address (FQDN or IP address of NF), and network element serving area information (NF Serving Area information).

Step 402-2: The NWDAF network element sends a subscription message to each of the one or more UPF network elements by using an event exposure subscription (Nupf_EventExposure_Subscribe) service operation, and correspondingly, each UPF network element receives the Nupf_EventExposure_Subscribe service operation from the NWDAF network element. The Nupf_EventExposure_Subscribe service operation is used to subscribe to and obtain data of a terminal in a specific area range from the UPF network element. For example, the data of the terminal may be data of a single terminal (for example, QoS flow Bit Rate, QoS flow Packet Delay, Packet transmission, Packet retransmission, and the like), or may be aggregated data (for example, Traffic usage report) of a plurality of terminals.

The subscription message carries the following parameters:
- Event ID: For details, refer to the descriptions in FIG. 4.1. Details are not described herein again.
- Event Filter: For details, refer to the descriptions in FIG. 4.1. Details are not described herein again.
- Target of Event Reporting indicates to collect data of specific terminals. For example, when Target of Event Reporting = Any UE, it represents that the NWDAF network element wants to collect data of all terminals in a data collection range identified by Event Filter. For example, when Event Filter = AoI and Target of Event Reporting = Any UE, it represents that the NWDAF network element wants to collect data of all terminals in a data collection range specified by AoI.

Step 402-3: The UPF network element sends the collected data of the terminal in the specific area range to the NWDAF network element by using an event exposure notify (Nupf_EventExposure_Notify) service operation. Optionally, the UPF network element may further send the collected data of the terminal to the NWDAF network element by using a common non-service-based interface (similar to an N4 interface) message.

A manner in which the NWDAF collects data from the UPF by using the SMF in FIG. 4.1 is also applicable to the UPF data collection scenario described in FIG. 4.2. Details are not described herein again.

In embodiments of this application, a specific structure of an execution body on one side in a data reporting method is not specially limited in embodiments of this application, provided that a program that records code of the data reporting method in embodiments of this application can be run, to perform communication according to a data reporting method in embodiments of this application. For example, the execution body in the data reporting method provided in embodiments of this application may be a functional module that is in a data analytics network element and that can invoke a program and execute the program, or may be a communication apparatus used in a data analytics network element, for example, a chip, a chip system, an integrated circuit, or the like. The chip, the chip system, and the integrated circuit may be disposed inside the data analytics network element, or may be independent of the data analytics network element. This is not limited in embodiments of this application. An execution body on the other side in the data reporting method provided in embodiments of this application may be a functional module that is in a first user plane network element and that can invoke and execute a program, or may be a communication apparatus used in a first user plane network element, for example, a chip, a chip system, an integrated circuit, or the like. The chip, the chip system, or the integrated circuit may be disposed inside the first user plane network element, or may be independent of the first user plane network element. This is not limited in embodiments of this application.

As shown in FIG. 5, a data reporting method provided in an embodiment of this application is shown in a manner of interaction between a data analytics network element and a first user plane network element. The data reporting method includes the following steps.

Step 501: The data analytics network element sends a first message to a first user plane network element, and correspondingly, the first user plane network element receives the first message from the data analytics network element.

The first message includes first reporting information, the first message is used to request the first user plane network element to report first data based on the first reporting information, the first data is data generated when the first user plane network element detects that a first event is triggered, the first reporting information includes first indication information and/or reporting time information, the first indication information is used by the first user plane network element to determine whether the reporting of the first data is delayed, and the reporting time information indicates the first user plane network element to determine time for reporting the first data.

In an example, the foregoing first message may be a subscription message, and the data analytics network element may send the subscription message to the first user plane network element by using an Nupf_EventExposure_Subscribe service operation, to subscribe to needed data.

It should be noted that if the first indication information indicates the first user plane network element not to delay the reporting of the first data, the first user plane network element reports the first data to the data analytics network element when detecting that the first event is triggered. In this case, impact on performance of the first user plane network element is not considered in a process in which the first user plane network element reports the first data to the data analytics network element. If the first indication information indicates the first user plane network element to delay the reporting of the first data, the first user plane network element reports the first data based on the reporting time information after detecting that the first event is triggered. In this case, impact on performance of the first user plane network element may be considered in a process in which the first user plane network element reports the first data to the data analytics network element. For example, the first data is sent to a first data analytics network element when load of the first user plane network element is less than a specific threshold, so that the impact on the performance of the first user plane network element caused by the first data reporting process is reduced.

Step 502: The first user plane network element obtains the first data.

Step 503: The first user plane network element reports the first data to the data analytics network element based on the first reporting information, and correspondingly, the data analytics network element receives the first data from the first user plane network element.

In an example, the first user plane network element may send the first data to the data analytics network element by using an Nupf_EventExposure_Notify service operation.

For example, when the first reporting information includes the first indication information, if the first indication information indicates that the reporting of the first data is not delayed, after the first user plane network element collects the first data, the first user plane network element immediately reports the first data to the data analytics network element if detecting that the first event is triggered.

For example, when the first reporting information includes the first indication information, if the first indication information indicates that the reporting of the first data is delayed, after the first user plane network element collects the first data, the first user plane network element may report the first data to the data analytics network element based on the reporting time information if detecting that the first event is triggered. For example, based on a requirement of the reporting time information, the first user plane network element may report the first data to the data analytics network element when the load of the first user plane network element is light.

In the data reporting method provided in this embodiment of this application, the data analytics network element provides the first reporting information for the first user plane network element. The first reporting information includes the first indication information and/or the reporting time information, and the first indication information is used by the first user plane network element to determine whether the reporting of the first data can be delayed. In this way, the first user plane network element can determine, based on an indication of the data analytics network element, whether the reporting of the first data can be delayed. When the reporting of the first data can be delayed, the first user plane network element may not need to immediately report the first data to the data analytics network element when detecting that the first event is triggered, but may autonomously choose to report the first data to a first data analytics network element when the load of the first user plane network element is light. This reduces impact of the reported data on the performance of the first user plane network element. The reporting time information indicates the first user plane network element to determine the time for reporting the first data. In this way, the first user plane network element can report the first data based on the reporting time indicated by the data analytics network element. This implements flexibility of data reporting, and reduces the impact of the reported data on the performance of the first user plane network element.

In a possible implementation of this application, the first message further includes a first event identifier, the first event identifier is associated with one or more user plane data types, and the first data is data that corresponds to the one or more user plane data types and that is generated when the first user plane network element detects that the first event is triggered.

It should be explained that the first event (Event) is used to describe an information record when a state of a specific object (such as UE, QoS Flow flow, UPF, Application ID, AoI, S-NSSAI, and the like) on the (first) user plane network element changes. If the first event is triggered, the (first) user plane network element generates data of the specific object. In response, the (first) user plane network element records the data of the specific object. The first event may be identified by using an event identifier (Event ID), and each first event may optionally be further associated with event filtering information (Event Filter), a target of event reporting (Target of Event Reporting), and event reporting information (Event Reporting Information). Refer to the foregoing descriptions, and details are not described herein again. For example, if the first event is QoS flow level information (QoS Flow Level Info), after a QoS flow (QoS Flow) is established, the (first) user plane network element records data corresponding to the QoS flow, for example, a QoS flow bit rate (QoS flow Bit Rate, QoS flow Packet Delay), a number of packet transmissions (Number of Packet transmissions), a number of packet retransmissions (Packet retransmission), a packet loss rate (Packet loss rate), and a packet error rate (Packet error rate).

In a possible implementation of this application, the first event identifier may be associated with the one or more user plane data types. For example, the one or more user plane data types associated with the first event identifier include the QoS flow bit rate (QoS flow Bit Rate, QoS flow Packet Delay), the number of packet transmissions (Number of Packet transmissions), the number of packet retransmissions (Packet retransmission), the packet loss rate (Packet loss rate), and the packet error rate (Packet error rate). The data analytics network element may not need to obtain all data of the one or more user plane data types associated with the first event identifier, the data analytics network element needs to obtain only data of a part of user plane data types. In this case, the data analytics network element may provide second indication information for the first user plane network element. The second indication information indicates that the data analytics network element requests to obtain data of at least one of the one or more user plane data types associated with the first event identifier. For example, the second indication information includes one or more indicators, one indicator is associated with a user plane data type, and the indicator indicates whether the user plane type associated with the indicator is valid. For example, if the indicator is a first indicator, it indicates that the user plane data type is valid, that is, the data of the user plane data type needs to be provided. If the indicator is a second indicator, it indicates that the user plane data type is invalid, that is, the data of the user plane data type does not need to be provided. For example, the first indicator may be 1, and the second indicator may be 0. In this case, the second indication information may be, for example, {1, 1, 0, 1, 0}, indicating that the NWDAF network element expects the first user plane network element to provide data of user plane data types such as QoS flow Bit Rate, QoS flow Packet Delay, and Packet loss rate. Alternatively, the data analytics network element may determine a second event identifier based on the one or more user plane data types identified by the first event identifier. The user plane data type associated with the second event identifier is a part of the one or more user plane data types identified by the first event identifier. In this case, the second indication information may be the second event identifier. For example, the user plane types associated with the second event identifier may include the user plane data types such as QoS flow Bit Rate, QoS flow Packet Delay, and Packet loss rate.

Optionally, in a possible implementation of this application, the first message further includes the second indication information. The second indication information indicates that the data analytics network element requests to obtain data of at least one of the one or more user plane data types associated with the first event identifier. Correspondingly, in step 502 in the foregoing, that the first user plane network element reports the first data to the data analytics network element based on the first reporting information includes: The first user plane network element obtains data of at least one user plane data type based on the second indication information, and reports the data of the at least one user plane data type to the data analytics network element based on the first reporting information. Correspondingly, that the data analytics network element receives the first data from the first user plane network element includes: The data analytics network element receives the data of the at least one user plane data type provided by the first user plane network element.

In a possible implementation of this application, the first reporting information includes one or more of the following information: third indication information, indicating the first user plane network element to report the first data to the data analytics network element when load of the first user plane network element is less than a preset threshold; and a first load threshold, used by the first user plane network element to report the first data to the data analytics network element when determining that the load of the first user plane network element is less than the first load threshold.

A main function of the first user plane network element is user plane data (packet) forwarding. When a network is congested or a large amount of data needs to be forwarded, the load of the first user plane network element is heavy, and the first user plane network element may fail to complete a data collection and reporting task. Therefore, the first user plane network element is indicated to report the first data when the load meets a requirement (for example, is lower than the preset threshold or the first load threshold). Impact of the data reporting on the performance of the first user plane network element can be reduced.

In a possible embodiment of this application, the reporting time information includes first start time information and first end time information, the first start time information is used by the first user plane network element to determine start time of reporting the first data to the data analytics network element, and the first end time information is used by the first user plane network element to determine first end time of reporting data to the data analytics network element. Alternatively, the reporting time information includes deadline information. The deadline information indicates the data analytics network element to start, before the deadline information, reporting the first data, or complete, before the deadline information, reporting the first data. Alternatively, the reporting time information includes second start time information and time length information. The first start time information is used by the first user plane network element to determine start time of reporting the first data to the data analytics network element, and the time length information is used by the first user plane network element to determine a time length of reporting data to the data analytics network element. Alternatively, the reporting time information includes time window information. The time window information is used by the first user plane network element to determine third start time and second end time of reporting data to the data analytics network element.

Optionally, the first start time information and the first end time information may indicate a time window. The time window may also be referred to as a time period. The time period may be a continuous time period or may be a discontinuous time period. This is not limited in this embodiment of this application.

Optionally, the first start time information and the time length information may indicate a time window. The time window may also be referred to as the time period. The time period may be the continuous time period or may be the discontinuous time period. This is not limited in this embodiment of this application.

Optionally, load of the first user plane network element in a time window determined based on the first start time information and the first end time information is less than a preset load threshold. Because the data analytics network element may provide a predicted analytics result of load of the network element, the data analytics network element may learn of, based on a predicted load status of the first user plane network element, a time period in which the load of the first user plane network element is light; use start time information of the time period in which the load is light as first start time information; and provide the first user plane network element with a length of the time period in which the load is light as first end time information. Alternatively, the data analytics network element may obtain, from the first user plane network element or another network element, a time period in which the load of the first user plane network element is light.

Optionally, the reporting time information indicates the first user plane network element to complete the reporting of the first data in the time window determined based on the first start time information and the first end time information, and the completing the reporting of the first data may also be understood as completing reporting the first data.

The method provided in this embodiment of this application is applicable to the following scenarios.

Scenario 1: Data of a specific terminal (for example, a first terminal) is obtained from the first user plane network element. In a possible embodiment of this application, when the data analytics network element needs to obtain the data of the specific terminal (for example, the first terminal), the first message further includes information about the first terminal, and correspondingly, the first message is used to request first data corresponding to the first terminal. Alternatively, the data analytics network element provides the information about the first terminal for the first user plane network element in another message other than the first message.

For example, the information about the first terminal identifies the first terminal, and the information about the first terminal may be an identifier of the first terminal, for example, an SUPI.

It may be understood that, in the scenario 1, if the first message includes the first event identifier, the first data that may be provided by the first user plane network element for the data analytics network element includes data of one or more user plane data types that are associated with the first event identifier and that are included in the data of the first terminal.

Scenario 2: Data of an area of interest is obtained from the first user plane network element. In a possible embodiment of this application, the first message may further include information about an AoI, information about a slice, or information about a specific application, and indicates the first user plane network element to provide data of a target terminal for the data analytics network element. For example, the target terminal is all terminals located in the serving area indicated by the information about the AoI, all terminals that use the slice indicated by the information about the slice, or all terminals that access the specific application.

It may be understood that, in the scenario 2, if the first message includes the first event identifier, the first data that may be provided by the first user plane network element for the data analytics network element includes data of one or more user plane data types that are associated with the first event identifier and that are included in the data of the target terminal.

In a possible embodiment provided in this application, the method provided in this embodiment of this application further includes: The data analytics network element sends a second message to the first user plane network element, and correspondingly, the first user plane network element receives the second message from the data analytics network element. The second message includes the first event identifier and information about a second terminal, the second message is used to request second data corresponding to the second terminal, and the second data is data generated when the first user plane network element corresponding to the second terminal detects that the first event is triggered. The data analytics network element receives, from the first user plane network element, the second data corresponding to the second terminal.

In a possible embodiment provided in this application, the second message includes first event reporting information. The method provided in this embodiment of this application further includes: The first user plane network element sends a first response to the data analytics network element based on the first event reporting information, and correspondingly, the data analytics network element receives the first response sent by the first user plane network element. The first response includes the first data corresponding to the first terminal and the second data corresponding to the second terminal. In this solution, the first user plane network element may aggregate, into a same response, event notifications corresponding to data subscription requests (for example, the first message and the second message) of two terminals from a same data analytics network element; and forward the response to the data analytics network element, that is, include data respectively corresponding to the two terminals in a same response message.

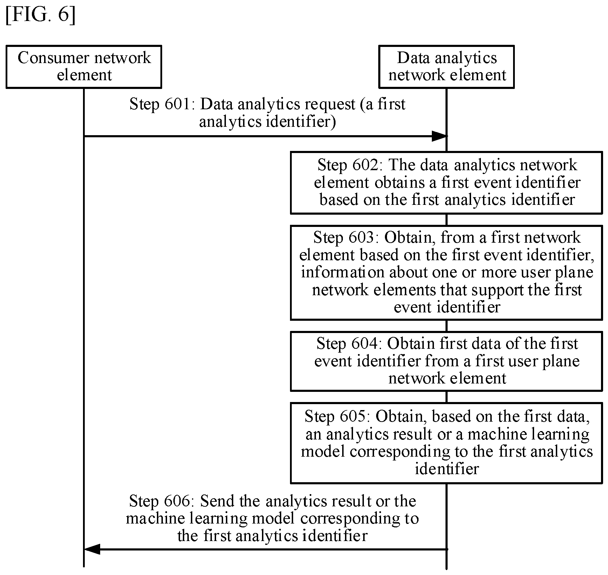

In a possible embodiment of this application, FIG. 6 shows another communication method according to an embodiment of this application. The method includes the following steps.

Step 601: A consumer network element sends a data analytics request to a data analytics network element, and correspondingly, the data analytics network element obtains the data analytics request from the consumer network element. The data analytics request includes a first analytics identifier. The data analytics request is used to request an analytics result or a machine learning model corresponding to the first analytics identifier.

In an example, the consumer network element may send the data analytics request to the data analytics network element. The data analytics request includes the first analytics identifier (Analytics ID). In an example, the data analytics request is used to request the analytics (analytics) result corresponding to the first analytics identifier or the machine learning model (ML model, Machine Learning model).

In an example, the consumer network element may subscribe to, from the data analytics network element in a subscription manner, the analytics result or the machine learning model corresponding to the first analytics identifier. The data analytics request may be an Nnwdaf_AnalyticsSubscription_Subscribe or Nnwdaf_AnalyticsInfo_Request Request service operation for subscribing to/requesting the analytics result. Alternatively, the data analytics request is an Nnwdaf_MLModelProvisioning_Subscribe or Nnwdaf_MLModelInfo_Request Request service operation that is sent by the consumer network element to the data analytics network element and that is used to subscribe to/request the machine learning model. This is not limited in this embodiment of this application.

In an example, the foregoing data analytics request may further carry one or more of analytics filtering information, target of analytics reporting information, and analytics reporting information:
- Analytics filtering (Analytics Filter) information indicates a range of an analytics result generated by an NWDAF network element, for example, an area of interest (Area of Interest, AoI), an application identifier (Application ID), or a slice identifier (for example, a single network slice selection assistance information (Single Network Slice Selection Assistance Information, S-NSSAI)). For example, when Analytics Filter = S-NSSAI, it represents that the NWDAF needs to obtain data in a specific slice, and the analytics result applies only to the slice. For another example, when ML Model Filter = AoI, it represents that the NWDAF needs to obtain data in a specific area of interest (identified by a group of TA/cell IDs), and the ML model obtained through training applies only to the area.
- Target of analytics reporting (Target of Analytics Reporting) information indicates a target for which the NWDAF network element generates the analytics result. For example, UE ID is for a single terminal, UE Group ID (Internal group ID, internal group identifier) is for a terminal group, and Any UE is for any terminal (in an area or the slice). For example, when Target of Analytics Reporting = UE ID, it represents that the NWDAF network element needs to collect data of a specific terminal identified by UE ID and the analytics result applies only to this terminal. For another example, when Target of ML Model Reporting = Any UE, it represents that the NWDAF network element needs to collect data of all terminals in a range limited by ML Model Filter, and an ML model obtained through training also applies to all terminals in the range.
- Analysis report (Analytics Reporting) information indicates a method in which the NWDAF network element reports the analytics result, for example, periodically reports indication information, periodicity information, or the like.

In an example, the Nnwdaf_MLModelProvisioning_Subscribe or Nnwdaf_MLModelInfo_Request Request service operation in the foregoing may further carry the following information:
- Machine learning model filtering (ML Model Filter) information indicates the NWDAF to generate a range of machine learning model information, for example, the area AoI, the application identifier Application ID, and the slice identifier S-NSSAI.
- Target of machine learning model reporting (Target of ML Model Reporting) information indicates a target for which the NWDAF generates machine learning model information. For example, UE ID is for a single terminal, UE Group ID (Internal group ID, internal group identifier) is for a terminal group, and Any UE is for any terminal (in an area or a slice).
- Machine learning model reporting (ML Model Reporting) information indicates a method in which the NWDAF reports the machine learning model information, for example, periodically reports the indication information, the periodicity information, or the like.

Step 602: The data analytics network element obtains a first event identifier based on the first analytics identifier.

It should be explained that, after receiving the data analytics request in step 601, the data analytics network element clearly determines that the analytics result or the machine learning model corresponding to the first analytics identifier needs data corresponding to one or more user plane data types on a user plane network element. To obtain the data, the data analytics network element first determines the first event identifier corresponding to the one or more user plane data types.

Step 603: The data analytics network element obtains, from a first network element based on the first event identifier, information about one or more user plane network elements that support the first event identifier. The one or more user plane network elements include a first user plane network element.

The first network element has at least related information of the one or more user plane network elements that support the first event identifier.

The following describes specific implementation of step 602 in three implementations.

In a possible implementation of this application, the data analytics network element has association information between each of one or more analytics identifiers and an event identifier, and correspondingly, step 602 in the foregoing may be implemented in Manner 1 in the following: The data analytics network element determines, based on the association information, an event identifier associated with the first analytics identifier as the first event identifier. The one or more analytics identifiers include the first analytics identifier.

For example, in Manner 1, the data analytics network element may define an event identifier (Event ID) for each analytics identifier (Analytics ID) that needs UPF data, that is, Event ID and Analytics ID are in a one-to-one relationship. Each Event ID corresponds to one user plane data type set (usually including one or more user plane data types), that is, one Event ID corresponds to the one or more user plane data types. In this embodiment of this application, integrity of specific user plane data types included in the user plane data type set is not defined. In this embodiment of this application, the user plane data type may also be referred to as a UPF data type.

For example, to obtain a service experience analytics result (Analytics ID = "Service Experience"), the data analytics network element needs to collect service experience related data from an AF network element, collect QoS flow-level network data from a core network element (an AMF network element/an SMF network element/a UPF network element), and collect UE level QoS related data from an OAM network element. Data that needs to be collected from the UPF network element is included, as shown in Table 3.

**Table 3**

| Data analytics type | UPF data type | Meaning |
|---|---|---|
| Service experience (Analytics ID = " Service Experience") | QoS flow Bit Rate | Observed uplink and downlink flow bit rates |
| | QoS flow Packet Delay | Observed uplink and downlink flow packet delays |
| | Packet transmission | Observed number of packet transmissions |
| | Packet retransmission | Observed number of packet retransmissions |

Therefore, in correspondence to Analytics ID = "Service Experience", one Event ID for collecting data from the UPF network element may be defined, that is, Event ID = "Service Experience related UPF Data". A data type set corresponding to Event ID that needs to be collected from the UPF network element includes QoS flow Bit Rate, QoS flow Packet Delay, Packet transmission, and Packet retransmission. However, the data type set corresponding to Event ID is not limited to the foregoing four data types, and may also include other data types, such as a packet loss rate (Packet loss rate) and a packet error rate (Packet error rate). A specific data type that is needed is determined by an algorithm and feature selection in a model training process, and a UPF data type corresponding to each Event ID cannot be completely defined in detail. Therefore, actually, the data type set corresponding to Event ID = "Service Experience related UPF Data" is dynamically determined by the NWDAF network element in a data processing and model training process. For example, if the NWDAF network element finds, in a model training phase, that accuracy of a model trained by a UPF data type set A corresponding to Event ID = " Service Experience related UPF Data" is not high, the NWDAF network element may add several new UPF data types to the UPF data type set A, to form a UPF data type set B. Then, the NWDAF network element may re-collect data from the user plane network element based on the UPF data type set B, to train a new model.

For another example, to obtain a communication analytics result (Analytics ID = "UE Communication") of a terminal, the NWDAF network element needs to collect session related data of the terminal from the SMF network element/AF network element, collect data such as location information of the terminal and a connection status of the terminal from the AMF network element, and collect communication data of the terminal from the UPF network element, as shown in Table 4.

**Table 4**

| Data analytics type | UPF data type | Meaning |
|---|---|---|
| UE communication (Analytics ID = "UE Communication") | Communication start time | Communication start timestamp |
| | Communication stop time | Communication end timestamp |
| | UL data rate | Uplink data rate |
| | DL data rate | Downlink data rate |
| | Traffic volume | Transmitted data capacity |

Therefore, in correspondence to Analytics ID = "UE Communication", an event identifier (Event ID) for collecting data from the UPF network element may be defined, that is, Event ID = "UE Communication related UPF Data". A user plane data type set corresponding to Event ID that needs to be collected from the UPF network element includes but is not limited to Communication start time, Communication stop time, UL data rate, DL data rate, and Traffic volume.

In another possible implementation 2 of this application, step 602 in the foregoing may be implemented in the following manner: The data analytics network element determines the first analytics identifier as the first event identifier.

Manner 2: Event ID of the UPF network element does not need to be defined. Instead, Analytics ID that needs UPF data is used to replace Event ID of the UPF network element. In other words, when the NWDAF network element subsequently requests data from the first user plane network element, the carried Event ID is Analytics ID. For example, when Analytics ID = "Service Experience" and the NWDAF network element determine to need to request information such as QoS flow Bit Rate, QoS flow Packet Delay, Packet transmission, and Packet retransmission from the first user plane network element (where, it is similar to Manner 1 that, the information is not limited thereto, and may also include information such as Packet loss rate and Packet error rate, and which information is specifically included is determined by the NWDAF), the NWDAF network element directly includes Analytics ID in a subscription message sent to the first user plane network element. In this case, the first user plane network element can understand that related UPF data corresponding to Analytics ID needs to be collected (assuming that the NWDAF determines that the first user plane network element is a user plane network element that can provide all UPF data types needed by the NWDAF).

In still another possible implementation 3 of this application, the data analytics network element has association information between each of one or more data granularities and the event identifier. Step 602 in the foregoing may be implemented in the following manner: The data analytics network element determines, based on the first analytics identifier, that data collected from the user plane network element is a first data granularity.

The data analytics network element determines an event identifier that is in the association information and that is associated with the first data granularity as the first event identifier. The first data granularity belongs to the one or more data granularities.

Manner 3: Event ID may be defined based on different granularities of data collected from the UPF. Data collected by the NWDAF network element from the UPF network element may be classified into different granularities, for example, a network element granularity (NF level), a UE granularity (UE level), a PDU session granularity (PDU Session Level), and a QoS flow granularity (QoS flow level). Therefore, different Event IDs may be defined based on the different granularities, for example, - Event ID = "NF Level UPF data": Traffic usage report, ... - Event ID = "UE Level UPF data": UE communication (Communication start, Communication stop, UL data rate, DL data rate, Traffic volume), ... - Event ID = "PDU Session Level UPF data": N4 Session ID, Inactivity detection time, ... - Event ID = "QoS Flow Level UPF data": QoS flow Bit Rate, QoS flow Packet Delay, Packet transmission, Packet retransmission, .... Similarly, a specific data type included in each Event ID is not limited, that is, a data type set corresponding to each Event ID may be extended. In addition, each Event ID may include UPF data types corresponding to a plurality of Analytics IDs.

Because each Analytics ID may include UPF data types of different granularities, it is necessary to map Analytics ID to one or more corresponding Event IDs (it can be learned that, Analytics IDs and Event IDs are in a many-to-many relationship). For example, when Analytics ID = "Dispersion Analytics", data that the NWDAF needs to collect from the UPF includes an application granularity and a UE granularity, and therefore, Analytics ID may be mapped to (Event ID = "UE Level UPF data", Event ID = "Application Level UPF data"). For each Event ID obtained through mapping, because Event ID corresponds to a plurality of data types, but the data type mapped from Analytics ID may be only a part of the plurality of UPF data types, second indication information (for example, a "list of event subsets that are requested" parameter) may indicate a specific data type that needs to be obtained in Event ID, as shown in Table 5.

**Table 5**

| Data analytics type | UPF data type | Meaning | Level |
|---|---|---|---|
| Hotspot analytics (Analytics ID = "Dispersion Analytics") | Data Volume UL/DL | Total UE data volume exchanged for each application on a UPF | Application |
| | Data Volume UL/DL | Total data volume of all service interaction for a piece of UE on the UPF | UE |

In a possible implementation of this application, step 603 in the foregoing may be implemented in the following manner: The data analytics network element sends a second message to the first network element, and correspondingly, the first network element receives the second message from the data analytics network element. The second message carries the first event identifier, and the second message is used to request the first network element to provide information about the user plane network element that supports the first event identifier. The first network element determines, based on the second message, information about one or more user plane network elements that support the first event identifier. The first network element provides the information about one or more user plane network elements for the data analytics network element, and correspondingly, the data analytics network element receives the information about the one or more user plane network elements from the first network element.

In an example, the first network element may be the SMF network element shown in FIG. 2, or the NRF network element or the UDM network element shown in FIG. 3.

For example, an example in which the first network element is the UDM network element or the SMF network element is used. When the data analytics network element sends, to the UDM network element or the SMF network element, a request for querying for the information about the user plane network element that supports the first event identifier, an identifier of a first terminal may be further carried. In this way, the SMF network element or the UDM network element determines whether there is related information of the first user plane network element that serves the first terminal.

When the SMF network element or the UDM network element determines that the related information of the first user plane network element exists, it represents that the first user plane network element has registered the related information of the first user plane network element with the SMF network element or the UDM network element. In this case, the SMF network element or the UDM network element may determine whether one or more event identifiers supported by the first user plane network element include the first event identifier. When the one or more event identifiers supported by the first user plane network element include the first event identifier, the SMF network element or the UDM network element may provide the information about the first user plane network element or the related information of the first user plane network element for the data analytics network element. When the SMF network element or the UDM network element determines that there is no related information of the first user plane network element, and the first user plane network element does not register the related information of the first user plane network element with the first network element, the first network element may request the first user plane network element to provide the related information of the first user plane network element for the first network element.

When the one or more event identifiers supported by the first user plane network element do not include the first event identifier, or the user plane data types associated with the one or more event identifiers include only a part of user plane data types in the first event identifier, the SMF network element or the UDM network element may determine that there is no first user plane network element that supports the first event identifier. In this case, the SMF network element or the UDM network element may feed back a query result to the data analytics network element, to be specific, indicate a first user plane network element that does not support the first event identifier. Alternatively, the SMF network element or the UDM network element may reselect, for the first terminal, a user plane network element (for example, a third user plane network element) that supports the first event identifier, and then provide information about the third user plane network element or related information of the third user plane network element for the data analytics network element.

Specifically, the NWDAF sends the second message to the NRF network element by using an Nnrf_NFDiscovery_Request service operation, or the second message is the Nnrf_NFDiscovery_Request service operation, for discovering a UPF that can provide needed data. Optionally, the second message carries information such as NF Type = UPF, AoI, S-NSSAI, or an application, so that the NRF network element matches information about the UPF network element that meets a condition.

In a possible embodiment of this application, before step 601, the method provided in this embodiment of this application may further include: The user plane network element registers the related information of the user plane network element with the first network element. Specifically, the user plane network element sends, to the first network element, a sixth message that carries the related information of the user plane network element.

Optionally, when the first network element is the SMF network element or the UDM network element that serves the first terminal, the sixth message may further carry identification information of the first terminal. This is not limited in this embodiment of this application. It may be understood that when the first network element is the SMF network element or the UDM network element that serves the first terminal, the first user plane network element may provide data of a single terminal (for example, the first terminal). For example, the data of the first terminal is data of the one or more user plane data types associated with the first event identifier.

In an example, the related information of the user plane network element may include the one or more event identifiers supported by the user plane network element. Optionally, the related information of the user plane network element may further include one or more of the following information: information about a serving area served by the user plane network element, information about a slice, or a network element type. For example, the network element type of the user plane network element is the user plane network element.

In a possible implementation of this application, the user plane network element may register the related information of the user plane network element with the first network element based on triggering of the first network element, or the user plane network element may actively register the related information of the user plane network element with the first network element. This is not limited in this embodiment of this application.

In a possible embodiment of this application, after step 603, as shown in FIG. 6, the method provided in this embodiment of this application may further include the following steps.

Step 604: The data analytics network element obtains the first data from the first user plane network element.

For a specific implementation of step 604, refer to the foregoing embodiment shown in FIG. 5. Details are not described herein again. Specifically, the data analytics network element sends a request/subscription message that includes the first event identifier to the first user plane network element. The request/subscription message is used to request the first user plane network element to provide data of at least one user plane data type associated with the first event identifier.

Step 605: The data analytics network element obtains the analytics result or the ML model based on the first data.

For a process in which the data analytics network element obtains the analytics result (for example, determines the analytics result based on the first data and an ML model inference) or the ML model (for example, trains the ML model based on the first data) based on the first data, refer to descriptions in a conventional technology. Details are not described herein again.

Step 606: The data analytics network element provides the analytics result or the ML model for the consumer network element.

It may be understood that, assuming that in step 601, the consumer network element requests the analytics result from the data analytics network element, and the data analytics network element provides the analytics result for the consumer network element. Assuming that in step 601, the consumer network element requests the ML model from the data analytics network element, and the data analytics network element provides the ML model for the consumer network element.

It should be noted that foregoing embodiments shown in FIG. 5 and FIG. 6 may be used in combination. For example, step 601 to step 603 are performed first, and then step 501 to step 503 are performed. Alternatively, embodiments shown in FIG. 5 and FIG. 6 may be separately used. This is not limited in embodiments of this application.

An example in which a user plane network element is a UPF network element, a data analytics network element is an NWDAF network element, and a first network element is an NRF network element is used below to describe a specific embodiment of a data reporting method provided in an embodiment of this application from the following two phases.
1. A registration phase is a process in which the UPF network element registers related information of the UPF network element with the NRF network element, and includes the following step 701 and step 702.

Step 701: The UPF network element sends a first service operation to the NRF network element, and correspondingly, the NRF network element receives the first service operation from the UPF network element. The first service operation carries the related information of the UPF. The first service operation is used to request to register the related information of the UPF with the NRF network element.

Optionally, the first service operation may further carry indication information, and the indication information indicates to register the related information of the UPF with the NRF network element.

In an example, the related information of the UPF includes one or more event identifiers supported by the UPF network element, and each event identifier corresponds to one data type set, for example, Event ID 1 = (QoS flow Bit Rate, QoS flow Packet Delay, Packet transmission, Packet retransmission). If supported Event ID of the UPF network element includes Event ID 1, it indicates that the UPF network element supports providing a group of data types corresponding to Event ID 1.

Optionally, the related information of the UPF further includes one or more of the following information: a network element type (NF type), a network element instance identifier (NF instance ID), an address of a network element, and serving area information (Serving Area information) of the network element.

For example, the network element type of the UPF network element may be NF type = UPF network element. The network element instance identifier identifies a specific network element instance. The address of the network element can be a fully qualified domain name (Fully Qualified Domain Name, FQDN) or an IP address. The serving area information of the network element may be a geographical area, for example, formed by one or more TA/cell IDs, or may be a network area, for example, formed by one or more S-NSSAIs/data network names (data network names, DNNs) /application identifiers (App IDs).

In an example, the first service operation may be an Nnrf_NFManagement_NFRegister Request service operation.

In a possible implementation of this application, the UPF network element may be triggered by the NRF network element to start to perform step 701, or the UPF network element actively registers the related information of the UPF network element with the NRF network element. This is not limited in this embodiment of this application.

Optionally, after step 701, the method may further include step 702: The NRF network element sends a response message to the UPF network element, and correspondingly, the UPF network element receives the response message from the NRF network element. The response message indicates that the related information of the UPF network element is successfully registered/fails to be registered.

In an example, the foregoing response message may be an Nnrf_NFManagement_NFRegister Response service operation. Optionally, the Nnrf_NFManagement_NFRegister Response service operation may carry a result indication (Result indication), to indicate that related registration of the network element succeeds/fails.

Optionally, when the related information of the network element is successfully registered, the NRF network element may not need to send the response message to the UPF network element. When the related information of the network element fails to be registered, the NRF network element may send the response message to the UPF network element. In this case, the response message may carry the result indication indicating that the registration fails. In this way, for the UPF network element, if the response message is received, the UPF network element may learn that the registration fails. Optionally, the NRF network element may further provide a registration failure cause for the UPF network element.

Optionally, the foregoing first service operation may further carry a registration indication, and the registration indication indicates the NRF network element to provide a registration success/failure indication for the UPF network element. Optionally, the registration indication indicates to provide, for the UPF network element when the registration fails, the result indication indicating that the registration fails. Alternatively, the registration indication indicates to provide, for the UPF network element when the registration succeeds, the result indication indicating that the registration succeeds. Alternatively, the registration indication indicates that the response message does not need to be returned when the registration succeeds, and the response message is returned when the registration fails. In this way, for the UPF network element, if the response message is received, that the related information of the UPF fails to be registered may be determined, or if the response message is not received, that the registration succeeds may be determined. Alternatively, the registration indication indicates that the response message does not need to be returned when the registration fails, and the response message is returned when registration succeeds. In this way, for the UPF network element, if the response message is received, that the related information of the UPF is successfully registered may be determined, or if the response message is not received, that the registration fails may be determined.

An example in which the registration indication is carried in the first service operation in the foregoing is used for description. Certainly, the foregoing registration indication may alternatively be carried in a message other than the first service operation. This is not limited in this embodiment of this application.

Optionally, as an alternative to the foregoing indication in which the UPF network element indicates the NRF network element whether to feed back the response message, the UPF network element may negotiate with the NRF network element whether to feed back the response message. Alternatively, a response mechanism is configured in the NRF network element. For example, if the registration succeeds, the response message is fed back; or if the registration fails, the response message is not fed back. Alternatively, if the registration fails, the response message is fed back, or if the registration succeeds, the response message is not fed back; or regardless of whether the registration succeeds or fails, the response message is fed back, where a function of the response message is different in different cases.

It may be understood that any UPF network element may register the related information of the UPF network element with the NRF network element by using step 701 in the foregoing, and then the NRF network element may have related information of one or more UPF network elements. Alternatively, the NRF network element may store the related information of the one or more UPF network elements in another network element (for example, a UDM network element). When the NRF network element stores the related information of the one or more UPF network elements in the another network element, the NRF network element may subsequently obtain, from the UDM network element, information about the one or more UPF network elements that meet a search condition of the NWDAF network element.

### 2. A data obtaining phase includes, for example, step 703 to step 713.

Step 703: A consumer network element sends a second service operation (corresponding to the data analytics request in step 601 in the foregoing) to the data analytics network element, and correspondingly, the data analytics network element receives the second service operation from the consumer network element.

The second service operation carries a first analytics identifier (Analytics ID), and the second service operation is used to request to obtain an analytics result or a machine learning model corresponding to the first analytics identifier.

In an example, the second service operation may be an Nnwdaf_AnalyticsSubscription_Subscribe or Nnwdaf_AnalyticsInfo_Request Request service operation that is sent by the consumer network element to the NWDAF network element and that is used to subscribe to/request the analytics result. Alternatively, the second service operation is an Nnwdaf_MLModelProvisioning_Subscribe or Nnwdaf_MLModelInfo_Request Request service operation that is sent by the consumer network element to the NWDAF network element and that is used to subscribe to/request the machine learning model.

Analytics ID is an analytics identifier that identifies a data analytics type. For example, Analytics ID = "Service Experience" represents a service experience analytics result, and Analytics ID = "NF load information" represents a network element load analytics result.

Optionally, for other information carried in the second service operation, refer to the information carried in the data analytics request in the foregoing embodiment. Details are not described herein again.

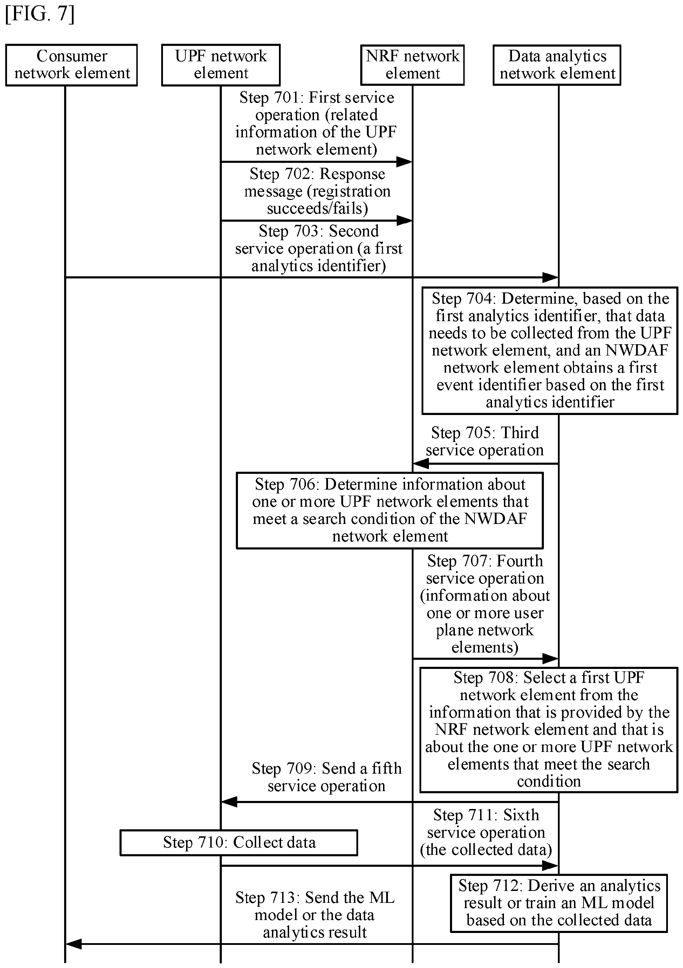

Optionally, in an embodiment shown in FIG. 7, Target of Analytics Reporting/Target of ML Model Reporting = Any UE.

Step 704: The NWDAF network element determines, based on the first analytics identifier, that data needs to be collected from the UPF network element, and the NWDAF network element obtains a first event identifier based on the first analytics identifier.

Step 705: The NWDAF network element sends a third service operation to the NRF network element, and correspondingly, the NRF network element receives the third service operation from the NWDAF network element.

The third service operation carries the search condition. For example, the search condition may include the first event identifier. The third service operation is used to request the NRF network element to provide information about a user plane network element that supports the first event identifier.

Optionally, the third service operation carries indication information a, and the indication information a indicates the NRF network element to provide the information about the user plane network element that supports the first event identifier.

Optionally, the third service operation may be an Nnrf_NFDiscovery_Request service operation.

Optionally, the search condition may further carry information such as NF Type = UPF, AoI, or S-NSSAI, so that the NRF network element matches a UPF network element that meets the condition.

Step 706: The NRF network element determines, based on the third service operation, information about the one or more UPF network elements that meet a search condition of the NWDAF network element.

In an example, the NWDAF provides the first event identifier as the search condition. The first event identifier may include one or more different Event IDs, for example, (Event ID 1, Event ID 2). In this case, the NRF network element needs to find, based on supported Event ID information in registration information of the UPF network element, UPF network elements whose supported Event IDs can include Event ID 1 and Event ID 2, for example, a UPF network element 1 and a UPF network element 2.

For example, the NWDAF provides AoI information as the search condition, and the AoI information indicates the following areas: (cell 1, cell 2, cell 3). In this case, the NRF network element needs to find, based on serving area information in the registration information of the UPF, UPF network elements whose serving areas can cover (cell 1, cell 2, cell 3), for example, the UPF network element 1 and a UPF network element 3.

For example, when the NWDAF provides the first event identifier and the AoI information as the search condition, the information about the one or more UPF network elements that meet the search condition of the NWDAF and that is found by the NRF network element is information about the UPF network element 1.

It may be understood that, when the NWDAF provides a plurality of pieces of information in NF Type = UPF, AoI, or S-NSSAI, and Event ID, the UPFs matched by the NRF network element need to meet all the foregoing conditions.

Step 707: The NRF network element sends a fourth service operation to the NWDAF network element, and correspondingly, the NWDAF network element receives the fourth service operation from the NRF network element. The fourth service operation is used by the NWDAF network element to determine the information about the user plane network element that can support the first event identifier.

Optionally, the fourth service operation carries information about one or more user plane network elements that meet a search condition of the NWDAF network element. For example, the information about the user plane network element may be information such as an ID and/or an IP address of the user plane network element.

Optionally, the fourth service operation may carry related information of all UPF network elements registered with the NRF network element. In this case, when the NWDAF network element receives the related information of all UPF network elements, the NWDAF network element may obtain, from the information, the information about the one or more user plane network elements that support the first event identifier. For example, the related information of the UPF network element provided by the NRF network element includes related information of the UPF network element 1 to related information of a UPF network element 7. The related information of the UPF network element 1, related information of the UPF network element 3, and related information of the UPF network element 4 include the first event identifier, and the related information of the another UPF network element does not include the first event identifier. In this case, the NWDAF network element may determine that the UPF network element 1, the UPF network element 3, and the UPF network element 4 support the first event identifier, in other words, a data type of the user plane data indicated by the first event identifier may be provided.

Optionally, when the third service operation does not carry the first event identifier and carries only NF Type = UPF, the NRF network element may provide the related information of all UPF network elements for the NWDAF network element. Optionally, when the third service operation does not carry the first event identifier and carries only the AoI information, the NRF network element may provide, for the NWDAF network element, related information of all one or more UPF network elements that can cover a serving area indicated by the AoI information. In this way, the NWDAF network element may find, based on the first event identifier, information about a group of UPF network elements that support the first event identifier from the related information of all one or more UPF network elements that can cover a serving area indicated by the AoI information.

Optionally, the third service operation may further carry an indication indicating the NRF network element to report the related information of the UPF network element.

Alternatively, in a process in which the NWDAF network element requests the information about the UPF network element, the NRF network element provides, by default for the NWDAF network element, the related information of the one or more UPF network elements that meet the search condition.

Alternatively, when the third service operation includes the first event identifier but does not include information such as NF Type = UPF, AoI, or S-NSSAI, the third service operation may further carry an indication that indicates the NRF to provide the related information of the UPF network element to the NWDAF network element. This is because a serving area of the UPF network element that supports the first event identifier may not include a serving area needed by the consumer network element. Alternatively, the network element that supports the first event identifier may not be the UPF network element. Therefore, the related information of the UPF network element is provided for the NWDAF network element, so that the NWDAF network element can select a first UPF network element that better meets a requirement of the consumer network element.

Optionally, in addition to providing the information about the one or more UPF network elements for the NWDAF network element, the NRF network element may further provide information other than the information about the UPF network elements in the related information of all the UPF network elements.

Optionally, when the third service operation carries information such as the first event identifier, NF Type = UPF, AoI, or S-NSSAI, the NRF network element may perform search based on a search condition provided by the NWDAF network element. In this case, to reduce signaling overheads, the NRF network element may provide, for the NWDAF network element, information about UPF network elements that meet all search conditions, and certainly, may further provide the related information of the UPF network element.

Step 708: The NWDAF network element selects the first UPF network element from the information that is provided by the NRF network element and that is about one or more UPF network elements that meet the search condition.

For example, the information that is provided by the NRF network element for the NWDAF network element and that is about the UPF network element that supports the first event identifier includes the information about the UPF network element 1, the information about the UPF network element 2, and the information about the UPF network element 3. However, a serving area of the UPF network element 1 is a cell 1 to a cell 3, a serving area of the UPF network element 2 is a cell 4 to a cell 6, and a serving area of the UPF network element 3 is a cell 3 to a cell 5. The user plane data needed by the consumer network element is data of at least two cells of the cell 1 to the cell 3. In this case, the NWDAF network element may determine that the first UPF network element is the UPF network element 1. For another example, if the UPF network element 1 corresponds to a slice 1 and a slice 2, the UPF network element 2 corresponds to a slice 3 and a slice 4, and the data needed by the consumer network element is data used by the terminal to access the slice 1 and the slice 2, the NWDAF network element may determine that the first UPF network element is the UPF network element 1. In this way, the selected first UPF network element can provide data that meets the requirement of the consumer network element.

When serving areas or slices of all UPF network elements in the UPF network elements that are provided by the NRF network element for the NWDAF network element and that support the first event identifier include a serving area or a slice needed by the consumer network element, the NWDAF network element may select any UPF network element from all UPF network elements as the first UPF network element, or the NWDAF network element may select one UPF network element based on a load status of the UPF network elements as the first UPF network element. For example, when obtaining the information about all UPF network elements, the NWDAF network element may request load of each UPF network element from each UPF network element, and then select, from the UPF network elements, a UPF network element whose load is less than a preset load threshold as the first UPF network element.

Step 709: The NWDAF network element sends a fifth service operation to the first UPF network element, and correspondingly, the first UPF network element receives the fifth service operation from the NWDAF network element. The fifth service operation may carry the first event identifier. The fifth service operation is used to request/subscribe to, from the first UPF network element, data of one or more data types indicated by the first event identifier.

In an example, the fifth service operation may be an Nupf_EventExposure_Subscribe service operation.

Optionally, the fifth service operation may further carry event filtering information (Event Filter), for example, Event Filter = AoI or S-NSSAI. The event filtering information is carried in the fifth service operation, so that the first UPF network element provides data that meets the event filtering information. For example, AoI indicates the cell 1 and the cell 2, and a data type set of the first event identifier is (QoS flow Bit Rate, QoS flow Packet Delay, Packet transmission, Packet retransmission, Packet loss rate, Packet error rate). In this case, the first UPF network element may provide data such as QoS flow Bit Rate, QoS flow Packet Delay, Packet transmission, Packet retransmission, Packet loss rate, and Packet error rate in the cell 1 and the cell 2 for the NWDAF network element.

Optionally, the event filtering information may further include time period information, indicating the first UPF network element to provide related data in a time period indicated by the time period information.

Specifically, the event filtering information provided by the NWDAF network element for the first UPF network element may be determined based on AoI information or S-NSSAI provided by the consumer network element. For example, the event filtering information provided by the NWDAF network element for the first UPF network element is the AoI information or S-NSSAI provided by the consumer network element, or includes the AoI information or S-NSSAI provided by the consumer network element.

One or more data types (for example, a data type set) of the first event identifier may include a large number of different data types. However, the NWDAF network element may want to obtain data of only a part of data types, and does not want to collect data of all data types. Therefore, optionally, Event Filter further includes "list of event subsets that are requested", indicating a subset of a to-be-obtained user plane data type set identified by the first event identifier. For example, the user plane data type set identified by the first event identifier is (QoS flow Bit Rate, QoS flow Packet Delay, Packet transmission, Packet retransmission, Packet loss rate, Packet error rate), and a value of "list of event subsets that are requested" is [1, 1, 1, 0, 0], indicating that the NWDAF wants to obtain only data of (QoS flow Bit Rate, QoS flow Packet Delay, Packet transmission, Packet retransmission). In this way, the first UPF network element does not need to report data of Packet loss rate and Packet error rate to the NWDAF network element.

Certainly, optionally, when the NWDAF network element may want to obtain data of only a part of data types, and does not want to collect data of all data types, the fifth service operation may carry a part of data types of all data types associated with the first event identifier, for example, carry only data types such as QoS flow Bit Rate, QoS flow Packet Delay, and Packet transmission.

Optionally, the fifth service operation may further carry event reporting information (Event Reporting Information).

In an example, Event Reporting Information includes at least one of indicator and/or reporting time information, where indicator indicates that the first UPF network element may delay or may not delay reporting data to the NWDAF.

For example, the reporting time information indicates a time condition for the UPF reporting data, and there are four manners.

In a 1^{st} manner, the NWDAF provides information about Event Reporting start time and Event Reporting end time. Event Reporting start time indicates first start time of the data reporting, Event Reporting end time indicates first end time of the data reporting, and the first UPF network element may send the data to the NWDAF in a first time period indicated by Event Reporting start time and Event Reporting end time. It should be noted that when Indicator is missing, if Event Reporting start time and Event Reporting end time are the same, that is, an interval between the two points of time is 0, the information about Event Reporting start time and Event Reporting end time indicates the first UPF network element not to delay reporting or to directly report data to the NWDAF.

In a 2^{nd} manner, the NWDAF network element provides Deadline information for the first UPF network element. The Deadline information indicates the first UPF network element to report data to the NWDAF network element before time indicated by the Deadline information. Alternatively, the Deadline information indicates the first UPF network element to report the data to the NWDAF network element when determining that load of the first UPF network element is light (for example, less than a load threshold that is set for the first UPF network element). This is because a main function of the UPF network element is user plane data packet forwarding. When a network is congested, a large amount of data needs to be forwarded. Consequently, load of the UPF network element is heavy, and the UPF network element may not be capable of completing a data collection and reporting task. However, the UPF network element needs to report the data to the NWDAF network element before Deadline. In this case, the NWDAF may further provide NF Load Threshold, or NF Load Threshold is configured on the first UPF network element. It should be noted that when Indicator is missing, if Deadline is 0, Deadline indicates the first UPF network element not to delay reporting or to directly report the data to the NWDAF network element.

NF Load Threshold is used to assist the first UPF network element in reporting data when determining that the load of the first UPF network element is less than NF Load Threshold.

Deadline information indicates a deadline (latest time) for the first UPF network element to report data to the NWDAF network element. If the load of the first UPF network element is always greater than or equal to NF Load Threshold or is greater than the load threshold set for the first UPF network element before the deadline, the first UPF network element should also report the data to the NWDAF network element before the deadline.

In a 3^{rd} manner, the NWDAF provides information about Event Reporting start time and Event Reporting duration, Event Reporting start time indicates second start time of the data reporting, Event Reporting duration indicates a time length of the data reporting, and the first UPF network element may send the data to the NWDAF in a second time period indicated by Event Reporting start time and Event Reporting duration. Because the NWDAF may provide a predicted analytics result of network element load, a first time period indicated by Event Reporting start time and Event Reporting duration may be a time period that is predicted by the NWDAF and in which the load of the first UPF network element is light. It should be noted that when Indicator is missing, if Event Reporting duration is 0, Event Reporting duration indicates that the first UPF network element not to delay reporting or to directly report the data to the NWDAF.

In a 4^{th} manner, the NWDAF provides time window (reporting time window) information. The time window information indicates third start time and second end time of the data reporting, and the first UPF network element may send the data to the NWDAF in the third time period indicated by reporting time window. It should be noted that when Indicator is missing, if reporting time window is 0, in other words, a third time period is 0, the reporting time window information indicates the first UPF network element not to delay reporting or to directly report the data to the NWDAF.

It should be explained that the fifth service operation in step 709 may be understood as the first message in the claims, and the event reporting information may be understood as the first reporting information in the claims.

Step 710: The first UPF network element collects data based on Event ID, Event Filter, and Target of Event Reporting that are provided by the NWDAF.

Step 711: The first UPF network element sends the collected data to the NWDAF network element by using a sixth service operation, and correspondingly, the NWDAF network element receives the sixth service operation from the first UPF network element, to obtain the data collected from the first UPF network element.

Optionally, when the fifth service operation carries Event Reporting Information, before step 711, the method provided in this embodiment of this application may further include: The first UPF network element determines, based on Event Reporting Information, time (that is, data sending time) for sending the data to the NWDAF network element, and correspondingly, step 711 in the foregoing may be implemented in the following manner: The first UPF network element sends the collected data to the NWDAF network element at the determined data sending time by using the sixth service operation.

For example, if Event Reporting Information is NF Load Threshold, the data sending time determined by the first UPF network element is a time period in which the load of the first UPF network element is lower than NF Load Threshold. If Event Reporting Information is Deadline, the first UPF network element determines that time before the deadline is the data sending time, or determines that the deadline is the data sending time.

For example, the sixth service operation may be an Nupf_EventExposure_Notify service operation.

Step 712: The NWDAF network element derives the analytics result or trains the ML model based on the collected data.

It may be understood that, if the consumer network element needs the analytics result, the NWDAF network element derives the analytics result based on the collected data. If the consumer network element needs to train the ML model, the NWDAF network element trains the ML model based on the collected data.

Step 713: The NWDAF network element sends the analytics result or the trained ML model to the consumer network element, and correspondingly, the consumer network element receives the analytics result or the trained ML model from the NWDAF network element.

In an example, the NWDAF network element sends the analytics result to consumer NF by using an Nnwdaf_AnalyticsSubscription_Notify or Nnwdaf_AnalyticsInfo_Request Response service operation. Alternatively, the NWDAF network element sends the ML model (or an address of an ML model file) to consumer NF by using the Nnwdaf_MLModelProvisioning_Notify or Nnwdaf_MLModelInfo_Request Response service operation.

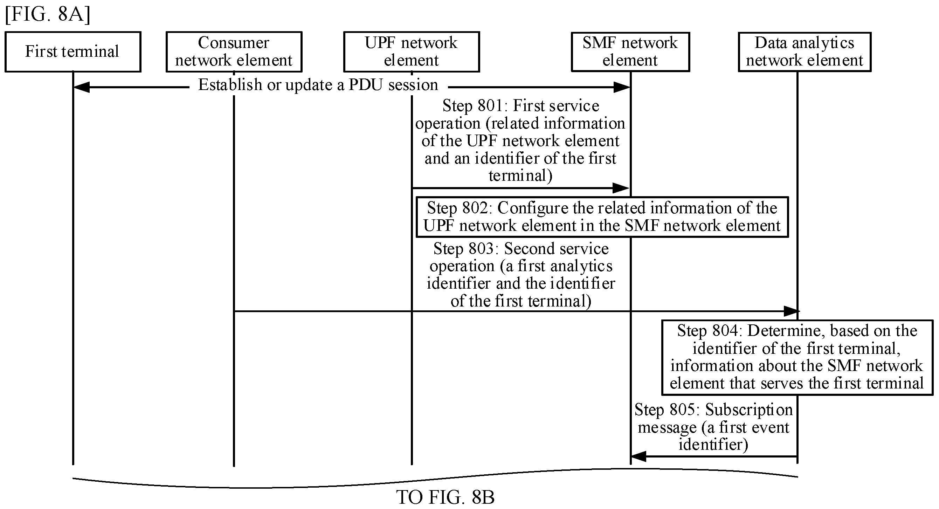

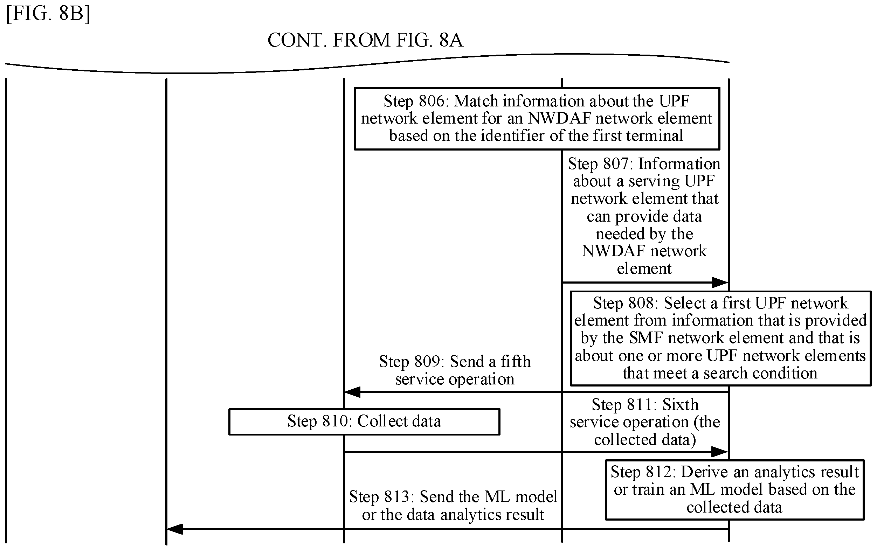

In an actual scenario, the consumer network element may alternatively subscribe to an ML model or a data analytics result of a specific terminal (for example, a first terminal shown in FIG. 8A and FIG. 8B) from the NWDAF network element. In this case, FIG. 8A and FIG. 8B show another data reporting method according to an embodiment of this application. The method includes the following steps.

Step 801: A UPF network element sends an N4 message to an SMF network element, and correspondingly, the SMF network element receives the N4 message from the UPF network element. The N4 message carries related information of the UPF and an identifier of a first terminal. The first terminal is a terminal served by the UPF network element.

For content of the related information of the UPF network element, refer to the descriptions in the foregoing embodiment. Details are not described herein again.

Specifically, in a PDU session establishment/modification process of the first terminal, the UPF network element sends the N4 message to the SMF network element that serves the first terminal. Alternatively, the UPF network element may send the N4 message to the SMF network element based on triggering of the SMF network element. Alternatively, in a PDU session establishment/modification process of the first terminal, the SMF network element or the first terminal triggers the UPF network element to send the N4 message to the SMF network element.

Step 802: The SMF network element configures the related information of the UPF network element in the SMF network element.

Step 803 is the same as step 703. Details are not described herein again.

A difference between step 803 and step 703 lies in that Target of Analytics Reporting/Target of ML Model Reporting sent by a consumer network element to an NWDAF network element in step 803 is the identifier of the first terminal. For example, the identifier of the first terminal may be an SUPI. In this way, the NWDAF network element determines that the consumer network element requests the ML model or the data analytics result of the first terminal. Optionally, in an embodiment shown in FIG. 8A and FIG. 8B, Target of Analytics Reporting/Target of ML Model Reporting = the identifier of the first terminal.

Step 804: The NWDAF network element determines, based on the identifier of the first terminal, information about the SMF network element that serves the first terminal.

For example, the NWDAF network element may determine, based on the identifier of the first terminal, a UDM network element that serves the first terminal. Because the UDM network element may store information about one or more network elements (for example, the SMF network element, an AMF network element, or the UPF network element) that serve a terminal, the NWDAF network element may determine, from the UDM network element, the information about the SMF network element that serves the first terminal. The information about the SMF network element identifies the SMF network element. For example, the information about the SMF network element may be an identifier or address information (for example, an IP address) of the SMF network element.

Step 805: The NWDAF network element sends a subscription message to the SMF network element that serves the first terminal, and correspondingly, the SMF network element receives the subscription message from the NWDAF network element. The subscription message is used to retrieve information about the UPF network element (that is, a serving UPF) that serves the first terminal. In addition, the subscription message further carries a related Event ID (that is, a first event identifier) for collecting data from the UPF network element, to assist the SMF network element in determining whether the UPF network element that serves the first terminal can provide needed data (that is, data of a user plane data type indicated by the first event identifier).

Step 806: The SMF network element matches, for the NWDAF network element based on the identifier of the first terminal, information about a UPF network element that meets a requirement.

It may be understood that, if the SMF network element does not store information such as Event ID supported by the UPF network element in step 801, or the serving UPF network element does not register related information of the serving UPF network element with the SMF network element, the SMF network element needs to retrieve, from an NRF network element, Event ID supported by the serving UPF network element to match the UPF network element. Alternatively, the SMF network element requests the serving UPF network element to provide the related information of the serving UPF network element.

If the SMF network element finds that Event ID supported by the serving UPF network element of the first terminal includes a first Event ID carried by the NWDAF network element in the subscription message, the SMF network element determines that the UPF network element matches successfully, and the SMF network element sends the information about the serving UPF network element to the NWDAF network element in the following step 807.

If the SMF network element finds that Event ID supported by the serving UPF network element that serves the first terminal cannot completely include the first Event ID that is needed by the NWDAF network element to collect data from the UPF network element and that is carried in the subscription message, the SMF network element determines that the UPF network element fails to be matched. In this case, the SMF network element may send, to the NWDAF network element, a notification message carrying a failure indication, so that the NWDAF network element determines, based on the failure indication, that the UPF network element that supports the first Event ID is not queried. Alternatively, the SMF network element selects a new serving UPF for the first terminal, and the new serving UPF can meet a data collection requirement of the NWDAF network element, that is, Event ID supported by the new serving UPF includes the first Event ID. Then, the SMF network element redirects a PDU session of the terminal to a new serving UPF (that is, UPF relocation). After the redirection is completed, the SMF network element sends the new serving UPF to the NWDAF network element in the following step 808.

Step 807: The SMF network element sends, to the NWDAF network element, information (such as UPF ID and a UPF address) about a serving UPF network element that can provide data needed by the NWDAF network element, and correspondingly, the NWDAF network element receives
the information about the serving UPF network element from the SMF network element.

Optionally, if the SMF network element determines, from a local configuration, that Event ID supported by the serving UPF network element includes the first event identifier, the information about the serving UPF network element in step 807 is information about the serving UPF network element that serves the first terminal. If the SMF network element determines, from a local configuration, that Event ID supported by the serving UPF network element does not include the first event identifier, or does not completely include the first event identifier, the information about the serving UPF network element in step 807 is information about the serving UPF network element reselected by the SMF network element for the first terminal.

It may be understood that, if the SMF network element sends, to the NWDAF network element, the notification message carrying the failure indication, the following step 808 to step 813 may be omitted, and correspondingly, the NWDAF network element may send, to the consumer network element, a message indicating that an analytics result or an ML model cannot be provided. For example, the message may carry indication information indicating that the analytics result or the ML model cannot be provided.

Step 808 to step 813 are the same as step 708 to step 713. Details are not described herein again.

In the embodiment shown in FIG. 8A and FIG. 8B, the UPF network element configures information such as supported Event ID in the SMF network element, and subsequently, a network element such as the NWDAF network element queries for the information, to assist the network element such as the NWDAF network element in retrieving, from the SMF network element based on the information such as Event ID, a UPF network element that can provide corresponding data.

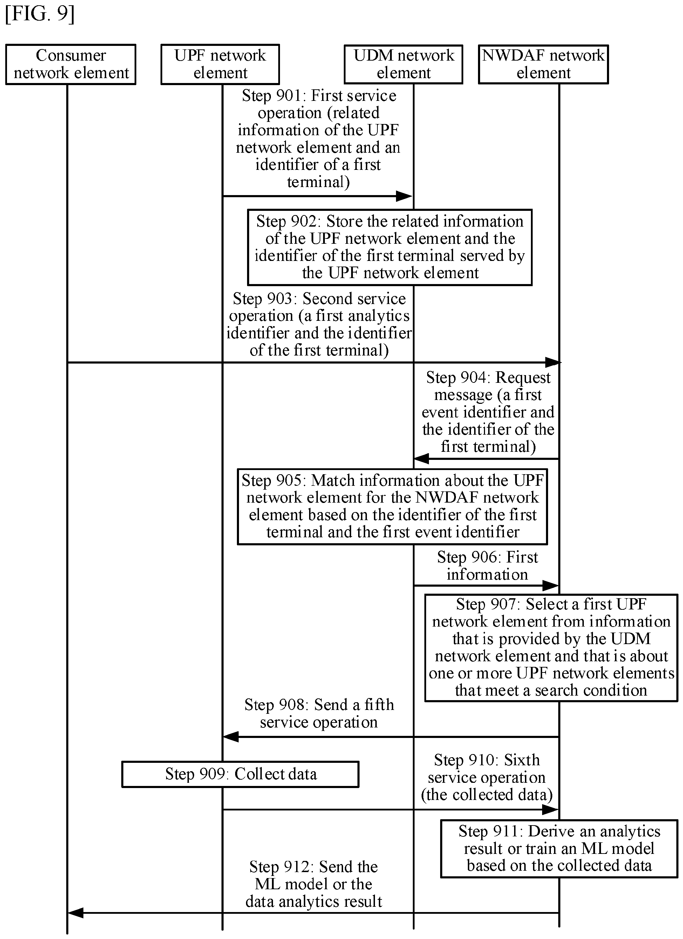

FIG. 9 is a specific embodiment of another data reporting method according to an embodiment of this application. A difference between the method and the method shown in FIG. 8A and FIG. 8B lies in that in this solution, a UPF network element registers related information of the UPF network element with a UDM network element, and subsequently when a consumer network element requests a data analytics result or an ML model of a first terminal from an NWDAF network element, the NWDAF network element discovers, from the UDM network element, information about a UPF network element that serves the first terminal and that supports a first event identifier. The method includes the following steps.

Step 901: The UPF network element registers the related information of the UPF network element with the UDM network element.

Optionally, in a PDU session establishment/modification process of the first terminal, the UPF network element may register, with the UDM network element by using the SMF network element, the related information of the UPF network element, an identifier of the first terminal served by the UPF network element, and the like. In an example, the UPF network element sends an N4 message to the SMF network element. The N4 message carries the related information of the UPF network element and the identifier of the first terminal. After receiving the N4 message, the SMF network element may send the related information of the UPF network element and the identifier of the first terminal to the UDM network element by using an Nudm_UECM_Registration service operation.

Optionally, the UPF network element may further indicate the SMF network element to forward the related information of the UPF network element and the identifier of the first terminal to the UDM network element. For example, the N4 message may further carry a forwarding indication, and the forwarding indication indicates the SMF network element to forward the related information of the UPF network element and the identifier of the first terminal to the UDM network element. Alternatively, the forwarding indication may be carried in a message other than the N4 message.

In another example, the UPF network element may directly register the related information of the UPF network element with the UDM network element without using the SMF network element. For example, the UPF network element may send the Nudm_UECM_Registration service operation to the UDM network element. The Nudm_UECM_Registration service operation carries the related information of the UPF network element and the identifier of the first terminal.

Optionally, the UDM network element may feed back a registration result indication to the UPF network element. The registration result indication indicates that the related information of the UPF network element is successfully registered/failed to be registered.

Step 902: The UDM network element stores the related information of the UPF network element and the identifier of the first terminal served by the UPF network element.

Step 903 is the same as step 803. Details are not described herein again.

Step 904: The NWDAF network element sends a request message to the UDM network element based on the identifier of the terminal and a first Event ID, to request the UDM network element to provide information about a serving UPF that provides a service for the first terminal and that supports the first event identifier.

In an example, step 904 may be implemented in the following manner: The NWDAF network element sends an Nudm_UECM_Get Request message to the UDM network element.

Step 905: The UDM network element matches information about the UPF network element for the NWDAF network element based on the identifier of the first terminal and the first event identifier.

Step 906: The UDM network element provides first information for the NWDAF network element. The first information is used to determine the information about the serving UPF that provides the service for the first terminal and that supports the first event identifier.

For example, the first information may be the information about the serving UPF that provides the service for the first terminal and supports the first event identifier.

In an example, step 905 may be implemented in the following manner: The NWDAF network element sends an Nudm_UECM_Get response message to the UDM network element. The Nudm_UECM_Get response message carries the information about the serving UPF or related information of the serving UPF.

Step 907 to step 912 are the same as step 709 to step 713. Details are not described herein again.

It may be understood that, if the UDM network element does not find, in step 905, the information about the serving UPF that provides the service for the first terminal and supports the first event identifier, the UDM network element sends a failure indication to the NWDAF network element, to indicate that a serving UPF that can provide data meeting a requirement for the first terminal is not found. Subsequently, the NWDAF network element may send a reject message to the consumer network element, to reject a request of the consumer network element. Optionally, the reject message may further carry a reject cause, for example, a serving UPF that is matched and that provides the data that meets the requirement for the first terminal.

In the embodiment shown in FIG. 9, the UPF network element configures information such as supported Event ID in the UDM network element, and a network element such as the NWDAF network element queries for the information, to assist the network element such as the NWDAF network element in retrieving, from the UDM network element based on the information such as Event ID, a UPF network element that can provide corresponding data.

The foregoing mainly describes the solutions in embodiments of this application from a perspective of interaction between network elements. It may be understood that, to implement the foregoing functions, the network elements such as a first network element, a first user plane network element, a data analytics network element, and the like include corresponding structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed on the first network element, the first user plane network element and the data analytics network element based on the foregoing method examples. For example, each functional unit may be obtained through division based on each corresponding function, or two or more functions may be integrated into one processing unit. The foregoing integrated unit may be implemented in a form of hardware, or may be implemented in a form of a software functional unit. It should be noted that, in this embodiment of this application, division into the units is an example, and is merely a logical function division. In actual implementation, another division manner may be used.

The foregoing describes the methods in embodiments of this application with reference to FIG. 5 to FIG. 9. The following describes a communication apparatus that is provided in embodiments of this application and that performs the foregoing methods. A person skilled in the art may understand that the method and the apparatus may be mutually combined and referenced. The communication apparatus provided in this embodiment of this application may perform the steps performed by the first network element, the first user plane network element, and the data analytics network element in the data reporting method shown in FIG. 5 or FIG. 6.

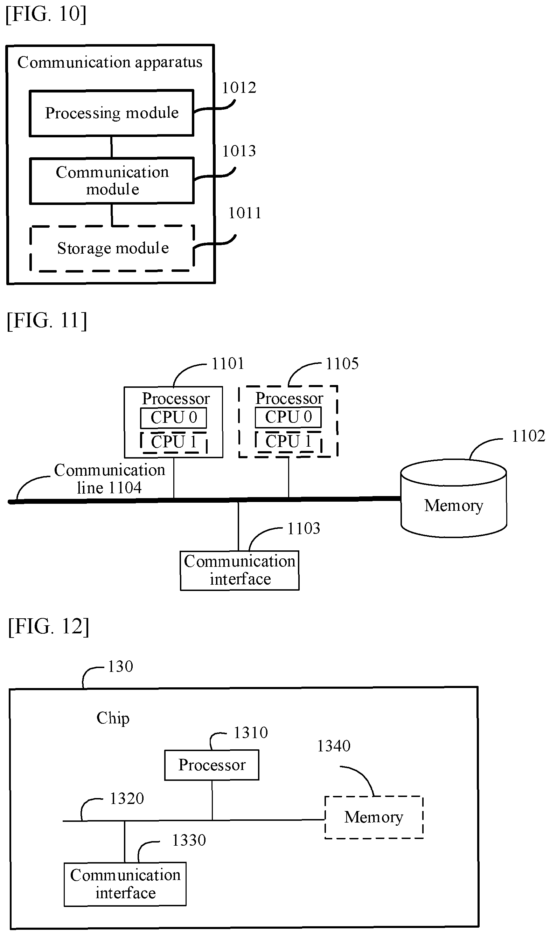

When an integrated unit is used, FIG. 10 shows a communication apparatus in the foregoing embodiment. The communication apparatus may include a communication module 1013 and a processing module 1012.

In an optional implementation, the communication apparatus may further include a storage module 1011, configured to store program code and data of the communication apparatus.

In an example, the communication apparatus is the first user plane network element, or is a chip used in the first user plane network element. In this case, the communication module 1013 is configured to support the communication apparatus in communicating with an external network element (for example, the data analytics network element). For example, the communication module 1013 is configured to perform signal receiving and sending operations of the user plane network element in the foregoing method embodiments. The processing module 1012 is configured to perform a signal processing operation of the first user plane network element in the foregoing method embodiments.

According to an aspect, in an embodiment of this application, the communication module 1013 is configured to perform a receiving action performed by the first user plane network element in step 501 and a sending action performed by the first user plane network element in step 503 in FIG. 5 in the foregoing embodiment. The processing module 1012 is configured to support the communication apparatus in performing step 502 in the step in FIG. 5.

In an example, the communication apparatus is the data analytics network element, or a chip used in the data analytics network element. In this case, the communication module 1013 is configured to support the communication apparatus in communicating with the external network element (for example, the first user plane network element or a consumer network element). For example, the communication module 1013 is configured to perform signal receiving and sending operations of the data analytics network element in the foregoing method embodiments. The processing module 1012 is configured to perform a signal processing operation of the data analytics network element in the foregoing method embodiments.

According to an aspect, in an embodiment of this application, the communication module 1013 is configured to perform a sending action performed by the data analytics network element in step 501 in FIG. 5 and a receiving action performed by the data analytics network element in step 503 in the foregoing embodiment. The processing module 1012 is configured to support the communication apparatus in performing the foregoing processing action performed by the data analytics network element.

For another example, in another embodiment of this application, the processing module 1012 is configured to perform step 602 to step 603 in FIG. 6 in the foregoing embodiment. The communication module 1013 is further configured to perform a receiving action performed by the data analytics network element in step 601 in FIG. 6 in the foregoing embodiment. The communication module 1013 is further configured to perform a sending action performed by the data analytics network element in step 606 in FIG. 6 in the foregoing embodiment.

The processing module 1012 may be a processor or a controller, for example, may be a central processing unit, a general-purpose processor, a digital signal processor, an application-specific integrated circuit, a field-programmable gate array or another programmable logical device, a transistor logical device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The communication module may be a transceiver, a transceiver circuit, a communication interface, or the like. The storage module may be a memory.

When the processing module 1012 is a processor 1101 or a processor 1105, the communication module 1013 is a communication interface 1103, and the storage module 1011 is a memory 1102, the communication apparatus in this application may be a communication device shown in FIG. 11.

FIG. 11 shows a schematic diagram of a hardware structure of the communication device according to an embodiment of this application. For structures of the first user plane network element and the data analytics network element in this embodiment of this application, refer to the schematic diagram of the structure of the communication device shown in FIG. 11. The communication device includes a processor 1101, a communication line 1104, and at least one communication interface (where a communication interface 1103 is used as an example in FIG. 11 for description).

The processor 1101 may be a general-purpose central processing unit (central processing unit, CPU), a microprocessor, an application-specific integrated circuit (application-specific integrated circuit, ASIC), or one or more integrated circuits that are configured to control execution of a program in a solution of this application.

The communication line 1104 may include a channel for transmitting information between the foregoing components.

The communication interface 1103 is configured to exchange information with another apparatus, for example, use any apparatus such as a transceiver, and is configured to communicate with another device or a communication network, for example, the Ethernet, a radio access network (radio access network, RAN), a wireless local area network (wireless local area network, WLAN), or the like.

Optionally, the communication device may further include a memory 1102.

The memory 1102 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory may exist independently, and is connected to the processor through the communication line 1104. The memory may alternatively be integrated with the processor.

The memory 1102 is configured to store computer-executable instructions used to implement the solutions in this application, and execution is controlled by the processor 1101. The processor 1101 is configured to execute the computer-executable instructions stored in the memory 1102, to implement a data reporting method in the following embodiments of this application.

Optionally, the computer-executable instructions in this embodiment of this application may also be referred to as application program code. This is not specifically limited in this embodiment of this application.

In specific implementation, in an embodiment, the processor 1101 may include one or more CPUs such as a CPU 0 and a CPU 1 in FIG. 11.

During a specific implementation, in an embodiment, the communication device may include a plurality of processors, for example, a processor 1101 and a processor 1105 in FIG. 11. Each of the processors may be a single-core (single-CPU) processor, or may be a multi-core (multi-CPU) processor. The processor herein may be one or more devices, circuits, and/or processing cores configured to process data (for example, computer program instructions).

For steps performed by the processor 1101 and the processor 1105, refer to the foregoing steps performed by the processing module 1012. For steps performed by the communication interface 1103, refer to the foregoing steps performed by the communication module 1013.

FIG. 12 is a schematic diagram of a structure of a chip 130 according to an embodiment of this application. The chip 130 includes one or more (including two) processors 1310 and a communication interface 1330.

Optionally, the chip 130 further includes a memory 1340. The memory 1340 may include a read-only memory and a random access memory, and provide operation instructions and data for the processor 1310. A part of the memory 1340 may further include a non-volatile random access memory (non-volatile random access memory, NVRAM).

In some implementations, the memory 1340 stores the following element: an execution module or a data structure, a subset of the execution module or the data structure, or an extended set of the execution module or the data structure.

In this embodiment of this application, the operation instructions stored in the memory 1340 (the operation instructions may be stored in an operating system) are invoked to perform corresponding operations.

In a possible implementation, structures of a first user plane network element and a data analytics network element are similar, and different apparatuses may use different chips to implement respective functions.

The processor 1310 controls a processing operation of either the first user plane network element or the data analytics network element, and the processor 1310 may also be referred to as a central processing unit (central processing unit, CPU).

The memory 1340 may include the read-only memory and the random access memory, and provide instructions and data to the processor 1310. A part of the memory 1340 may further include an NVRAM. For example, in an application, the memory 1340, the communication interface 1330, and the memory 1340 are coupled together via a bus system 1320. The bus system 1320 may further include a power bus, a control bus, a state signal bus, and the like in addition to a data bus. However, for clarity of description, various buses are marked as a bus system 1320 in FIG. 12.

The methods disclosed in the foregoing embodiments of this application may be applied to the processor 1310, or may be implemented by the processor 1310. The processor 1310 may be an integrated circuit chip that has a signal processing capability. In an implementation process, steps in the foregoing methods may be completed by an integrated logic circuit of hardware in the processor 1310 or by instructions in a software form. The foregoing processor 1310 may be a general-purpose processor, a digital signal processor (digital signal processing, DSP), an ASIC, a field-programmable gate array (field-programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be the microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory 1340, and the processor 1310 reads information in the memory 1340 and completes the steps in the foregoing methods in combination with hardware of the processor 1310.

In a possible implementation, the communication interface 1330 is configured to perform receiving and sending steps of the first user plane network element in embodiments shown in FIG. 5 to FIG. 9. The processor 1310 is configured to perform processing steps of the first user plane network element in embodiments shown in FIG. 5 to FIG. 9.

In a possible implementation, the communication interface 1330 is configured to perform receiving and sending steps of the data analytics network element in embodiments shown in FIG. 5 to FIG. 9. The processor 1310 is configured to perform the processing steps of the data analytics network element in embodiments shown in FIG. 5 to FIG. 9.

According to an aspect, a computer-readable storage medium is provided. The computer-readable storage medium stores instructions. When the instructions are run, functions performed by the data analytics network element in FIG. 5 or FIG. 6 are implemented.

According to an aspect, a computer-readable storage medium is provided. The computer-readable storage medium stores instructions. When the instructions are run, functions performed by the first user plane network element in FIG. 5 or FIG. 6 are implemented.

According to an aspect, a computer program product including instructions is provided. The computer program product includes the instructions. When the instructions are run, functions performed by the data analytics network element in FIG. 5 or FIG. 6 are implemented.

According to an aspect, a computer program product including instructions is provided. The computer program product includes the instructions. When the instructions are run, functions performed by the first user plane network element in FIG. 5 or FIG. 6 are implemented.

According to an aspect, a chip is provided. The chip is used in the first user plane network element. The chip includes at least one processor and a communication interface. The communication interface is coupled to the at least one processor. The processor is configured to run instructions, to implement functions performed by the first user plane network element in FIG. 5 to FIG. 9.

According to an aspect, a chip is provided. The chip is used in the data analytics network element. The chip includes at least one processor and a communication interface. The communication interface is coupled to the at least one processor. The processor is configured to run instructions, to implement functions performed by the data analytics network element in FIG. 5 to FIG. 9.

An embodiment of this application provides a communication system. The communication system includes a first user plane network element and a data analytics network element. The first user plane network element is configured to perform a function performed by the first user plane network element in FIG. 5, and the data analytics network element is configured to perform a function performed by the data analytics network element in FIG. 5. Optionally, the system may further include a consumer network element, configured to perform the steps performed by the consumer network element in FIG. 6, and correspondingly, the data analytics network element is further configured to perform the steps in FIG. 6.

All or a part of the foregoing embodiments may be implemented by software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, a network device, user equipment, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium such as a floppy disk, a hard disk drive, or a magnetic tape, may be an optical medium such as a digital video disc (digital video disc, DVD), or may be a semiconductor medium such as a solid state drive (solid state drive, SSD).

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A data reporting method, comprising:
sending, by a data analytics network element, a first message to a first user plane network element, wherein the first message comprises first reporting information, the first message is used to request the first user plane network element to report first data based on the first reporting information, the first data is data generated when the first user plane network element detects that a first event is triggered, the first reporting information comprises first indication information and/or reporting time information, the first indication information is used by the first user plane network element to determine whether the reporting of the first data can be delayed, and the reporting time information indicates the first user plane network element to determine time for reporting the first data; and
receiving, by the data analytics network element, the first data from the first user plane network element.

2. The method according to claim 1, wherein the first message further comprises a first event identifier, the first event identifier is associated with one or more user plane data types, and the first data is data that corresponds to the one or more user plane data types and that is generated when the first user plane network element detects that the first event is triggered.

3. The method according to claim 1 or 2, wherein the first message further comprises second indication information, the second indication information indicates the data analytics network element to request to obtain data of at least one of one or more user plane data types associated with the first event identifier, and correspondingly, the receiving, by the data analytics network element, the first data from the first user plane network element comprises:
receiving, by the data analytics network element, the data of the at least one user plane data type provided by the first user plane network element.

4. The method according to any one of claims 1 to 3, wherein the first reporting information comprises one or more of the following information:
third indication information, indicating the first user plane network element to report the first data to the data analytics network element when load of the first user plane network element is less than a preset threshold; and
a first load threshold, used by the first user plane network element to report the first data to the data analytics network element when determining that the load of the first user plane network element is less than the first load threshold.

5. The method according to any one of claims 1 to 4, wherein the reporting time information comprises first start time information and first end time information, the first start time information is used by the first user plane network element to determine start time of reporting the first data to the data analytics network element, and the first end time information is used by the first user plane network element to determine end time of reporting data to the data analytics network element; or
the reporting time information comprises deadline information, wherein the deadline information indicates the data analytics network element to start, before the deadline information, reporting the first data, or complete, before the deadline information, reporting the first data.

6. The method according to claim 5, wherein in a time window determined based on the first start time information and the first end time information, the load of the first user plane network element is less than the preset load threshold.

7. The method according to any one of claims 1 to 6, wherein the method further comprises:
obtaining, by the data analytics network element, a first analytics identifier from a consumer network element, wherein the first analytics identifier is used to request an analytics result or a machine learning model corresponding to the first analytics identifier;
obtaining, by the data analytics network element, the first event identifier based on the first analytics identifier; and
obtaining, by the data analytics network element from a first network element based on the first event identifier, information about one or more user plane network elements that support the first event identifier, wherein the one or more user plane network elements comprise the first user plane network element.

8. The method according to claim 7, wherein the data analytics network element has association information between each of one or more analytics identifiers and an event identifier, and correspondingly, the obtaining, by the data analytics network element, the first event identifier based on the first analytics identifier comprises:
determining, by the data analytics network element based on the association information, an event identifier associated with the first analytics identifier as the first event identifier, wherein the one or more analytics identifiers comprise the first analytics identifier.

9. The method according to claim 7, wherein the obtaining, by the data analytics network element, the first event identifier based on the first analytics identifier comprises:
determining, by the data analytics network element, the first analytics identifier as the first event identifier.

10. The method according to claim 7, wherein the data analytics network element has association information between each of one or more data granularities and an event identifier, and the obtaining, by the data analytics network element, the first event identifier based on the first analytics identifier comprises:
determining, by the data analytics network element based on the first analytics identifier, that data collected from the user plane network element is a first data granularity; and
determining, by the data analytics network element, an event identifier that is in the association information and that is associated with the first data granularity as the first event identifier, wherein the first data granularity belongs to the one or more data granularities.

11. The method according to any one of claims 7 to 10, wherein the obtaining, by the data analytics network element from a first network element based on the first event identifier, information about one or more user plane network elements that support the first event identifier comprises:
sending, by the data analytics network element, a second message to the first network element, wherein the second message carries the first event identifier, and the second message is used to request the first network element to provide information about a user plane network element that supports the first event identifier; and
receiving, by the data analytics network element, information about the one or more user plane network elements from the first network element.

12. The method according to any one of claims 1 to 11, wherein the first message further comprises information about a first terminal, and the first message is used to request the first data corresponding to the first terminal; and
when the data analytics network element further requests, from the first user plane network element by using a third message, second data corresponding to a second terminal, and the third message further comprises the first reporting information, the receiving, by the data analytics network element, the first data from the first user plane network element comprises:
receiving, by the data analytics network element, a first response sent by the first user plane network element, wherein the first response comprises the first data corresponding to the first terminal and the second data corresponding to the second terminal.

13. A data reporting method, comprising:
receiving, by a first user plane network element, a first message from a data analytics network element, wherein the first message comprises first reporting information, the first message is used to request the first user plane network element to report first data based on the first reporting information, the first data is data generated when the first user plane network element detects that a first event is triggered, the first reporting information comprises first indication information and/or reporting time information, the first indication information is used by the first user plane network element to determine whether the reporting of the first data can be delayed, and the reporting time information indicates the first user plane network element to determine time for reporting the first data;
obtaining, by the first user plane network element, the first data; and
reporting, by the first user plane network element, the first data to the data analytics network element based on the first reporting information.

14. The method according to claim 13, wherein the first message further comprises a first event identifier, the first event identifier is associated with one or more user plane data types, and the first data is data that corresponds to the one or more user plane data types and that is generated when the first user plane network element detects that the first event is triggered.

15. The method according to claim 13 or 14, wherein the first message further comprises second indication information, the second indication information indicates the data analytics network element to request to obtain data of at least one of one or more user plane data types associated with the first event identifier, and correspondingly, the obtaining, by the first user plane network element, the first data comprises:
obtaining, by the first user plane network element, the data of the at least one user plane data type as the first data based on the second indication information.

16. The method according to any one of claims 13 to 15, wherein the first reporting information comprises one or more of the following information:
third indication information, indicating the first user plane network element to report the first data to the data analytics network element when load of the first user plane network element is less than a preset threshold; and a first load threshold, used by the first user plane network element to report the first data to the data analytics network element when determining that the load of the first user plane network element is less than the first load threshold, and correspondingly, the reporting, by the first user plane network element, the first data to the data analytics network element based on the first reporting information comprises:
reporting, by the first user plane network element, the first data to the data analytics network element based on the third indication information and/or the first load threshold.

17. The method according to any one of claims 13 to 16, wherein the reporting time information comprises
first start time information and first end time information, the first start time information is used by the first user plane network element to determine start time of reporting the first data to the data analytics network element, and the first end time information is used by the first user plane network element to determine first end time of reporting data to the data analytics network element; or
the reporting time information comprises deadline information, wherein the deadline information indicates the data analytics network element to start, before the deadline information, reporting the first data, or complete, before the deadline information, reporting the first data.

18. The method according to any one of claims 13 to 17, wherein the method further comprises:
sending, by the first user plane network element, related information of the first user plane network element to a first network element, wherein the related information of the first user plane network element comprises at least one or more event identifiers supported by the first user plane network element.

19. The method according to claim 18, wherein the method further comprises:
sending, by the first user plane network element to the first network element, an identifier of a terminal served by the first user plane network element.

20. The method according to any one of claims 13 to 19, wherein the first message further comprises information about a first terminal, the first message is used to request the first data corresponding to the first terminal, and correspondingly, the first data is the first data corresponding to the first terminal.

21. The method according to claim 20, wherein the method further comprises:
receiving, by the first user plane network element, a third message from the data analytics network element, and when the third message is used to request, from the first user plane network element, second data corresponding to a second terminal, and the third message further comprises the first reporting information, the reporting, by the first user plane network element, the first data to the data analytics network element based on the first reporting information comprises: reporting, by the first user plane network element, a first response to the data analytics network element based on the first reporting information, wherein the first response comprises the second data corresponding to the second terminal and the first data corresponding to the first terminal.

22. A chip, wherein the chip comprises at least one processor and a communication interface, the communication interface is coupled to the at least one processor, and the at least one processor is configured to run a computer program or instructions, to implement the data reporting method according to any one of claims 1 to 12, or to implement the data reporting method according to any one of claims 13 to 21, wherein the communication interface is configured to communicate with another module outside the chip.

23. A communication apparatus, comprising a processing unit and a communication unit, wherein
the communication unit is configured to perform an operation of sending and receiving a message in a data analytics network element in the data reporting method according to any one of claims 1 to 12; and the processing unit runs instructions to perform an operation of processing or control in the data analytics network element in the data reporting method according to any one of claims 1 to 12; or
the communication unit is configured to perform an operation of sending and receiving a message in a first user plane network element in the data reporting method according to any one of claims 13 to 21; and the processing unit runs instructions to perform an operation of processing or control in the first user plane network element in the data reporting method according to any one of claims 13 to 21.

24. A computer-readable storage medium, wherein the computer-readable storage medium stores instructions, and when the instructions are run, the data reporting method according to any one of claims 1 to 12 is implemented, or the data reporting method according to any one of claims 13 to 21 is implemented.

25. A communication system, comprising a first user plane network element and a data analytics network element communicating with the first user plane network element, wherein the data analytics network element is configured to perform the data reporting method according to any one of claims 1 to 12, and the first user plane network element is configured to perform the data reporting method according to any one of claims 13 to 21.

26. A communication apparatus, wherein the communication apparatus comprises a processor, the processor is connected to a memory, and the processor is configured to store instructions or a computer program stored in the memory, to implement the data reporting method according to any one of claims 1 to 12.

27. A communication apparatus, wherein the communication apparatus comprises a processor, the processor is connected to a memory, and the processor is configured to store instructions or a computer program stored in the memory, to implement the data reporting method according to any one of claims 13 to 21.
